(19) **Europäisches Patentamt / European Patent Office / Office européen des brevets**

(11) **EP 4 621 706 A1**

(12) **EUROPEAN PATENT APPLICATION**
published in accordance with Art. 153(4) EPC

(43) Date of publication:
24.09.2025 Bulletin 2025/39

(21) Application number: 23893999.5

(22) Date of filing: 24.11.2023

(51) International Patent Classification (IPC):
*G06T 5/00* (2024.01)

(52) Cooperative Patent Classification (CPC):
G06N 3/0475; G06N 3/096; G06T 5/00

(86) International application number:
PCT/CN2023/133865

(87) International publication number:
WO 2024/109910 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.11.2022 CN 202211497412

(71) Applicant: Huawei Technologies Co., Ltd.
Shenzhen, Guangdong 518129 (CN)

(72) Inventors:
• LUO, Weijian
Shenzhen, Guangdong 518129 (CN)
• HU, Tianyang
Shenzhen, Guangdong 518129 (CN)
• SUN, Jiacheng
Shenzhen, Guangdong 518129 (CN)
• ZHANG, Shifeng
Shenzhen, Guangdong 518129 (CN)

(74) Representative: Epping - Hermann - Fischer
Patentanwaltsgesellschaft mbH
Schloßschmidstraße 5
80639 München (DE)

(54) **GENERATIVE MODEL TRAINING METHOD AND APPARATUS AND DATA CONVERSION METHOD AND APPARATUS**

(57) This application provides a generative model training method, and a data conversion method and apparatus that are applied to the field of artificial intelligence, to obtain a generative model with better output effect through stable training, and perform data conversion required by a user based on the generative model. The method includes: using data in a noise set as an input of the generative model, and outputting at least one generated sample, where the generative model is used to perform data conversion on the input data; using the at least one generated sample as an input of a first diffusion model, and outputting at least one first diffusion score, that is, scoring output effect of the generative model based on the first diffusion model; and updating the generative model based on the at least one first diffusion score and at least one second diffusion score output by a second diffusion model, to obtain an updated generative model, where the second diffusion model is obtained through training based on a real sample set.

[FIG. 4]

**Description**

This application claims priority to Chinese Patent Application No. 202211497412.1, filed with the China National Intellectual Property Administration on November 26, 2022 and entitled "GENERATIVE MODEL TRAINING METHOD, AND DATA CONVERSION METHOD AND APPARATUS", which is incorporated herein by reference in its entirety.

TECHNICAL FIELD

This application relates to the field of artificial intelligence, and in particular, to a generative model training method, and a data conversion method and apparatus.

BACKGROUND

A generative model has a wide range of application scenarios and is of great value, and can be used to implement a plurality of tasks such as high-resolution image generation, text-to-image conversion, text-to-speech conversion, or speech generation. A mutual game between a discrimination network and a generative network is introduced to an implicit generative model represented by a generative adversarial network (generative adversarial network, GAN), and transformation from noise to data distribution is learned through adversarial training. However, an optimization process is unstable in an adversarial training process, and the training easily crashes. Therefore, how to implement stable generative model training becomes an urgent problem to be resolved.

SUMMARY

This application provides a generative model training method, and a data conversion method and apparatus that are applied to the field of artificial intelligence, to obtain a generative model with better output effect through stable training, and perform data conversion required by a user based on the generative model.

In view of this, according to a first aspect, this application provides a generative model training method, including: using data in a noise set as an input of a generative model, and outputting at least one generated sample, where the generative model is used to perform data conversion on the input data, the noise set may include multi-frame noise data, and the multi-frame noise data may include received noise data or randomly generated data; using the at least one generated sample as an input of a first diffusion model, and outputting at least one first diffusion score, where the first diffusion model is used to separately diffuse each generated sample for at least one time and score diffused data, which is equivalent to scoring output effect of the generative model based on the first diffusion model; and updating the generative model based on the at least one first diffusion score and at least one second diffusion score output by a second diffusion model, to obtain an updated generative model. The second diffusion model is obtained through training based on a real sample set, each sample in the real sample set includes a corresponding label (label), the second diffusion model is used to diffuse input data for at least one time and score diffused data, parameters of the first diffusion model and the second diffusion model are different, and the updated generative model is used to: extract a feature from data input by a user in a computing device, and generate corresponding data based on the extracted feature.

The first diffusion model that is updated based on output data of a to-be-trained generative model may be set, and the second diffusion model is a model obtained through training based on the real sample set. A loss value is calculated based on a difference between the output of the first diffusion model and the output of the second diffusion model, and the generative model is updated. This is equivalent to that the second diffusion model is used as a teacher model, and the first diffusion model is used as a student model, to perform knowledge distillation. Therefore, no adversarial training is required, and stable and efficient training can be implemented. Therefore, in this implementation of this application, two diffusion models are separately used for diffusion. For example, one diffusion model diffuses the real sample, and one diffusion model diffuses the generated sample, to reduce a distribution distance between the real sample and the generated sample. This helps calculate a loss value between the real sample and the generated sample, thereby reversely updating the generative model, and improving and optimizing stability of the model without the adversarial training.

In a possible implementation, the updating the generative model based on the at least one first diffusion score and at least one second diffusion score output by a second diffusion model, to obtain an updated generative model may include: updating the first diffusion model based on the at least one first diffusion score, to obtain an updated first diffusion model; using the at least one generated sample as an input of the updated first diffusion model, and outputting at least one third diffusion score, where the at least one second diffusion score is in one-to-one correspondence with the at least one third diffusion score, which may be understood that for diffusion performed at each time, diffusion scales of the two diffusion models are the same, and therefore, diffusion scores output based on score functions also one-to-one correspond to the diffusion scales; obtaining the at least one second diffusion score output by the second diffusion model; and updating the generative model based on a loss value between each of the at least one third diffusion score and a corresponding second diffusion score, to obtain the updated generative model.

In this implementation of this application, the first diffusion model may be first updated, and the loss value is calculated based on the diffusion score that is output by the diffusion model for another time, so that the generative model can be updated based on the accurate score that is output by the updated diffusion model, thereby implementing stable update of the generative model.

In a possible implementation, the method provided in this application may further include: using the sample in the real sample set as an input of the second diffusion model, and outputting at least one fourth diffusion score; and updating the second diffusion model based on the at least one fourth diffusion score, to obtain an updated second diffusion model. The sample in the real sample set may be used as an input of the updated second diffusion model for another time, and the at least one second diffusion score is output.

In this implementation of this application, in an iteration process of training the generative model, the second diffusion model may be synchronously updated in each iteration, so that an output result of the diffusion model obtained through training based on real data can be used to guide the update of the generative model, thereby implementing stable training effect.

In a possible implementation, the second diffusion model is a model pre-trained based on the real sample set, and the obtaining the at least one second diffusion score output by the second diffusion model may include: obtaining the at least one second diffusion score from the second diffusion model.

In an implementation of this application, the second diffusion model may be pre-trained, so that in a process of training the generative model, the second diffusion model may directly output the better diffusion score. This is equivalent to that the pre-trained second diffusion model is used as the teacher model, and the generative model is used as the student model, to perform distillation.

A generative model with better output effect is obtained. In addition, in the process of training the generative model, the second diffusion model does not need to be additionally trained, so that training overheads can be reduced, and training efficiency can be improved.

In a possible implementation, the first diffusion model is used to: perform noise addition on a first generated sample based on a preset step size, to obtain at least one first noise sample; and use the at least one first noise sample as an input of a first score function, and output the at least one first diffusion score. Therefore, in the first diffusion model, noise addition is performed, so that a distance between the noise sample and the real sample is shorter, thereby facilitating subsequent loss value calculation, and implementing stable update of the generative model.

In a possible implementation, when the sample in the real sample set is used as the input of the second diffusion model, the second diffusion model is used to: perform noise addition on the sample in the real sample set based on the preset step size, to obtain at least one second noise sample; and use the at least one second noise sample as an input of a second score function, and obtain the at least one second diffusion score.

Therefore, the first diffusion model and the second diffusion model may perform diffusion based on the same diffusion step size, so that samples of a same diffusion scale may be scored.

In a possible implementation, the generative model is used to perform one or more of the following tasks: converting input text into an image, converting an input speech into an image, supplementing an input image with data, converting input text into a speech, or converting resolution of an input image. Therefore, the generative model provided in this application can be applied to a plurality of scenarios, has diversity, and has a strong generalization capability.

According to a second aspect, this application provides a data conversion method, including:

receiving input data, where the input data includes data input by a user; and
using the input data as an input of a generative model, to obtain an output result, where the generative model is used to: extract a feature from the input data, and perform modeling based on the extracted feature, to obtain the output result. The generative model is used to: extract the feature from the input data, and generate data of a preset type based on the extracted feature; the generative model is obtained through training based on output results of a first diffusion model and a second diffusion model; the first diffusion model is obtained by performing training based on an output sample of a generative model that is before training is completed; the second diffusion model is obtained through training based on a real sample set; each sample in the real sample set includes a corresponding label; the second diffusion model is used to: diffuse the input data for at least one time, and score diffused data; and parameters of the first diffusion model and the second diffusion model are different.

In an implementation of this application, in a process of training the generative model, the first diffusion model that is updated based on output data of a to-be-trained generative model may be set, and the second diffusion model is a model obtained through training based on the real sample set. A loss value is calculated based on a difference between the output of the first diffusion model and the output of the second diffusion model, and the generative model is updated. This is equivalent to that the second diffusion model is used as a teacher model, and the first diffusion model is used as a student model, to perform knowledge distillation. Therefore, no adversarial training is required, and stable and efficient training can be implemented. When the first diffusion model and the second diffusion model separately diffuse the input sample for a plurality of times, according to the method provided in this application, score functions between real data distribution and generated data distribution may be matched on a plurality of diffusion scales, to implement efficient non-adversarial training of an implicit generative model.

In a possible implementation, the generative model is used to perform one or more of the following tasks: converting input text into an image, converting an input speech into an image, supplementing an input image with data, converting input text into a speech, or converting resolution of an input image. Therefore, the generative model provided in this application can be applied to a plurality of scenarios, has diversity, and has a strong generalization capability.

According to a third aspect, this application provides a generative model training apparatus, including:

a generation module, configured to: use data in a noise set as an input of a generative model, and output at least one generated sample, where the generative model is used to perform data conversion on the input data, and the noise set includes multi-frame noise data;

a first diffusion module, configured to: use the at least one generated sample as an input of a first diffusion model, and output at least one first diffusion score, where the first diffusion model is used to separately diffuse each generated sample for at least one time and score diffused data; and a training module, configured to update the generative model based on the at least one first diffusion score and at least one second diffusion score output by a second diffusion model, to obtain an updated generative model. The second diffusion model is obtained through training based on a real sample set, each sample in the real sample set includes a corresponding label, the second diffusion model is used to diffuse input data for at least one time and score diffused data, parameters of the first diffusion model and the second diffusion model are different, and the updated generative model is used to: extract a feature from data input by a user in a computing device, and generate corresponding data based on the extracted feature.

For effect achieved by any one of the third aspect or the optional implementations of the third aspect provided in this application, refer to effect of any one of the first aspect or the optional implementations of the first aspect. Details are not described herein again.

In a possible implementation, the training module is specifically configured to:
update the first diffusion model based on the at least one first diffusion score, to obtain an updated first diffusion model; use the at least one generated sample as an input of the updated first diffusion model, and output at least one third diffusion score, where the at least one second diffusion score is in one-to-one correspondence with the at least one third diffusion score; obtain the at least one second diffusion score output by the second diffusion model; and update the generative model based on a loss value between each of the at least one third diffusion score and a corresponding second diffusion score, to obtain the updated generative model.

In a possible implementation, the apparatus further includes: a second diffusion module, configured to: use the sample in the real sample set as an input of the second diffusion model, and output at least one fourth diffusion score.

The training module is further configured to: update the second diffusion model based on the at least one fourth diffusion score, to obtain an updated second diffusion model; and use the sample in the real sample set as an input of the updated second diffusion model, and output the at least one second diffusion score.

In a possible implementation, the second diffusion model is a model pre-trained based on the real sample set, and the training module is further configured to obtain the at least one second diffusion score from the second diffusion model.

In a possible implementation, the first diffusion model is used to: perform noise addition on a first generated sample based on a preset step size, to obtain the at least one first noise sample; and use the at least one first noise sample as an input of a first score function, and output the at least one first diffusion score.

In a possible implementation, when the sample in the real sample set is used as the input of the second diffusion model, the second diffusion model is used to: perform noise addition on the sample in the real sample set based on the preset step size, to obtain at least one second noise sample; and use the at least one second noise sample as an input of a second score function, and obtain the at least one second diffusion score.

In a possible implementation, the generative model is used to perform one or more of the following tasks: converting input text into an image, converting an input speech into an image, supplementing an input image with data, converting input text into a speech, or converting resolution of an input image.

According to a fourth aspect, this application provides a data conversion apparatus, including:

a transceiver module, configured to receive input data, where the input data includes data input by a user; and
a generation module, configured to use the input data as an input of a generative model, to obtain an output result, where the generative model is used to: extract a feature from the input data, and perform modeling based on the extracted feature, to obtain the output result.

The generative model is used to: extract the feature from the input data, and generate data of a preset type based on the extracted feature; the generative model is obtained through training based on output results of a first diffusion model and a second diffusion model; the first diffusion model is obtained by performing training based on an output sample of a generative model that is before training is completed; the second diffusion model is obtained through training based on a real sample set; each sample in the real sample set includes a corresponding label; the second diffusion model is used to: diffuse the input data for at least one time, and score diffused data; and parameters of the first diffusion model and the second diffusion model are different.

In a possible implementation, the generative model is used to perform one or more of the following tasks: converting input text into an image, converting an input speech into an image, supplementing an input image with data, converting input text into a speech, or converting resolution of an input image.

According to a fifth aspect, an embodiment of this application provides a generative model training apparatus, and the generative model training apparatus has a function of implementing the method in the first aspect. The function may be implemented by hardware, or may be implemented by hardware executing corresponding software. The hardware or the software includes one or more modules corresponding to the function.

According to a sixth aspect, an embodiment of this application provides a data conversion apparatus. The data conversion apparatus has a function of implementing the method in the first aspect. The function may be implemented by hardware, or may be implemented by hardware executing corresponding software. The hardware or the software includes one or more modules corresponding to the function.

According to a seventh aspect, an embodiment of this application provides a generative model training apparatus, including a processor and a memory. The processor and the memory are interconnected through a line, and the processor calls program code in the memory to perform a processing-related function in the generative model training method shown in any implementation of the first aspect. Optionally, the generative model training apparatus may be a chip.

According to an eighth aspect, an embodiment of this application provides a data conversion apparatus, including a processor and a memory. The processor and the memory are interconnected through a line, and the processor calls program code in the memory to perform a processing-related function in the data conversion method shown in any implementation of the second aspect. Optionally, the data conversion apparatus may be a chip.

According to a ninth aspect, an embodiment of this application provides a generative model training apparatus. The generative model training apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any one of the first aspect or the optional implementations of the first aspect.

According to a tenth aspect, an embodiment of this application provides a data conversion apparatus. The data conversion apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any one of the second aspect or the optional implementations of the second aspect.

According to an eleventh aspect, an embodiment of this application provides a computer-readable storage medium including instructions. When the instructions are run on a computer, the computer is enabled to perform the method in any optional implementation of the first aspect or the second aspect.

According to a twelfth aspect, an embodiment of this application provides a computer program product including instructions. When the computer program product runs on a computer, the computer is enabled to perform the method in any optional implementation of the first aspect or the second aspect.

BRIEF DESCRIPTION OF DRAWINGS

FIG. 1 is a diagram of a system architecture according to this application;
FIG. 2 is a diagram of another system architecture according to this application;
FIG. 3 is a diagram of another system architecture according to this application;
FIG. 4 is a schematic flowchart of a generative model training method according to this application;
FIG. 5 is a schematic flowchart of another generative model training method according to this application;
FIG. 6 is a schematic flowchart of another generative model training method according to this application;
FIG. 7 is a diagram of diffusion effect according to this application;
FIG. 8 is a schematic flowchart of another generative model training method according to this application;
FIG. 9 is a schematic flowchart of another generative model training method according to this application;
FIG. 10 is a schematic flowchart of a data conversion method according to this application;

FIG. 11 is a diagram of generation effect according to this application;
FIG. 12 is a diagram of training effect according to this application;
FIG. 13 is a diagram of other generation effect according to this application;
FIG. 14 is a diagram of other generation effect according to this application;
FIG. 15 is a diagram of other generation effect according to this application;
FIG. 16 is a diagram of other generation effect according to this application;
FIG. 17 is a diagram of other generation effect according to this application;
FIG. 18 is a diagram of a structure of a generative model training apparatus according to this application;
FIG. 19 is a diagram of a structure of a data conversion apparatus according to this application;
FIG. 20 is a diagram of a structure of another generative model training apparatus according to this application;
FIG. 21 is a diagram of a structure of another data conversion apparatus according to this application; and
FIG. 22 is a diagram of a structure of a chip according to this application.

DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

An overall working procedure of an artificial intelligence system is first described. The following describes an artificial intelligence main framework from two dimensions: an "intelligent information chain" and an "IT value chain". The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry in a process from an underlying infrastructure and information (providing and processing technology implementation) of the artificial intelligence to a systemic industrial ecology.

(1) Infrastructure

The infrastructure provides computing capability support for the artificial intelligence system, implements communication with the external world, and implements support via a base platform. The infrastructure communicates with the outside via a sensor. A computing capability is provided by an intelligent chip, for example, a hardware acceleration chip like a central processing unit (central processing unit, CPU), a neural network processing unit (neural network processing unit, NPU), a graphics processing unit (graphics processing unit, GPU), an application-specific integrated circuit (application-specific integrated circuit, ASIC), or a field programmable gate array (field programmable gate array, FPGA). The base platform includes related platforms, for example, a distributed computing framework and a network, for assurance and support, including cloud storage and computing, an interconnection network, and the like. For example, the sensor communicates with the outside to obtain data, and the data is provided for an intelligent chip in a distributed computing system provided by the basic platform for computing.

(2) Data

Data at an upper layer of the infrastructure indicates a data source in the field of artificial intelligence. The data relates to a graph, an image, a speech, and text, further relates to Internet of things data of a conventional device, and includes service data of an existing system and perception data like force, displacement, a liquid level, temperature, and humidity.

(3) Data processing

Data processing usually includes manners such as data training, machine learning, deep learning, searching, inference, and decision-making.
Machine learning and deep learning may mean performing symbolized and formalized intelligent information modeling, extraction, preprocessing, training, and the like on data.
Inference is a process in which a pattern of human intelligent inference is simulated in a computer or an intelligent system, and machine thinking and problem resolving are performed by using formalized information according to an inferring control policy. A typical function is searching and matching.

Decision-making is a process in which a decision is made after intelligent information is inferred, and usually provides functions such as classification, ranking, and prediction.

(4) General capabilities

After data processing mentioned above is performed on the data, some general capabilities may further be formed based on a data processing result. For example, the general capabilities may be an algorithm or a general system, for example, translation, text analysis, computer vision processing, speech recognition, and image recognition.

(5) Intelligent product and industry application

Intelligent products and industry applications refer to products and applications of artificial intelligence systems in various fields, and are encapsulation for an overall artificial intelligence solution, to productize intelligent information decision-making and implement applications. Application fields thereof mainly include an intelligent terminal, intelligent transportation, intelligent healthcare, autonomous driving, a smart city, and the like.

The method provided in this application relates to a related concept of a neural network. For ease of understanding, the following first describes a related concept of a neural network.

(1) Neural network

The neural network may include neurons. The neuron may be an operation unit that uses $x_s$ as an input. An output of the operation unit may be:

$$h_{W,b}(x) = f(W^T x) = f(\sum_{s=1}^{n} W_s x_s + b).$$

$s$=1, 2, ..., or n, n is a natural number greater than 1, $W_s$ is a weight of $x_s$, and $b$ is bias of the neuron. $f$ is an activation function (activation function) of the neuron, used to perform non-linear transformation on a feature obtained in the neural network, to convert an input signal in the neuron into an output signal. The output signal of the activation function may serve as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Convolutional neural network

The convolutional neural network (convolutional neural network, CNN) is a deep neural network with a convolutional structure. The convolutional neural network includes a feature extractor including a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane may share a weight, and the shared weight herein is a convolution kernel. Weight sharing may be understood as that a feature extraction manner is irrelevant to a location. The convolution kernel may be initialized in a form of a matrix of a random size. In a training process of the convolutional neural network, an appropriate weight may be obtained for the convolution kernel through learning. In addition, direct benefit brought by weight sharing is that connections between layers in the convolutional neural network are reduced and an overfitting risk is lowered.

(3) Generative model

The generative model is a model that can randomly generate observation data, especially when some hidden parameters are given. The generative model specifies joint probability distribution for an observed value and a labeled data sequence. In machine learning, the generative model may be used to directly model data (for example, perform data sampling based on a probability density function of a variable), or may be used to establish conditional probability distribution between variables. The conditional probability distribution may be formed by a generative model according to Bayesian theorem.

(4) Implicit generative model

The implicit generative model (implicit generative model) is a parameterized transformation from noise to real data in a neural network. After the generative model is trained, random noise is input, and a high-quality sample can be output. The model is referred to as the implicit model because the model cannot obtain probability density function estimation of data, and can only sample the data. A generative model mentioned below in this application is the implicit generative model.

(5) Generative diffusion model

The generative diffusion model (generative diffusion model) is a type of probabilistic generative model. The model uses a time-related score function model s(x, t) (usually a deep neural network) to fit a score function of probability distribution obtained through evolution of data distribution in a specific diffusion process, to learn a feature of the data distribution. The generative diffusion model is used to simulate a solution of a backward stochastic differential equation to generate data.

(6) Score function

The score function (score function) refers to a gradient of a logarithmic density function of probability distribution to an independent variable, is a description of the probability distribution, and is mathematically expressed as $s(x) = \nabla_x \log p(x)$, where p(x) refers to a probability density function, and s(x) refers to the score function.

(7) Generative adversarial network

The generative adversarial network (generative adversarial network, GAN) training is a mainstream implicit generative model training paradigm. For a given implicit generative network, a mutual game between a discrimination network and a generative network is introduced. From a perspective of optimization, it is a typical minimax optimization (minimax optimization) problem. An equilibrium state of the game may correspond to distances between various types of distribution, for example, an optimal transmission distance and the Jensen-Shannon divergence. The minimax optimization problem is very unstable, and it is difficult to achieve global optimization. Optimization costs of the GAN are high, and generation diversity needs to be improved.

(8) Generative model sampling

A new sample is generated from a trained generative model. For a GAN, the process is inputting low-dimensional random noise to an implicit generative network, and outputting the sample through one time of network fronthaul. For a DPM, the process is based on same-dimensional random noise, and after a denoising process corresponding to a diffusion noise addition process, a sample can be generated only after thousands of times of network fronthaul is performed.

(9) Diffusion probabilistic process (diffusion process)

This is a process in which data changes with time according to a given rule. Generally, in a probability theory and statistics, the diffusion process is a solution of a stochastic differential equation. This is a continuous Markov process, and is a continuous sample path. Brownian motion, reflective Brownian motion, and the Ornstein-Uhlenbeck process are diffusion processes.

(10) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss. The loss function may generally include mean square error, cross entropy, logarithm, and exponential loss functions. For example, the error mean square loss function may be used as the loss function, which is defined as

$$mse = \frac{1}{N}\sum_{n=1}^{N}(y_n - \hat{y}_n)^2$$ . Specifically, a specific loss function may be selected based on an actual application scenario.

(11) Back propagation algorithm

In a training process, a convolutional neural network may correct values of parameters of an initial neural network model by using an error back propagation (back propagation, BP) algorithm, so that a reconstruction error loss in the model becomes increasingly smaller. Specifically, an input signal is transferred forward until an error loss occurs at an output, and the parameter in the initial model is updated based on back propagation error loss information, to make the error loss converge. The back propagation algorithm is error-loss-centered back propagation motion intended to obtain a parameter, for example, a weight matrix, of an optimal model.

(12) A gradient is a derivative vector of a loss function about a parameter.

The method provided in embodiments of this application may be performed on a server, or may be performed on a terminal device. The server may include a local server, an integration server, a distributed server, or the like. The terminal device may include a mobile phone, a tablet personal computer (tablet personal computer, TPC), a media player, a smart television, a laptop computer (laptop computer, LC), a personal digital assistant (personal digital assistant, PDA), a personal computer (personal computer, PC), a camera, a video camera, a smart watch, a wearable device (wearable device, WD), or an autonomous vehicle. This is not limited in embodiments of this application.

The following describes a system architecture according to an embodiment of this application.

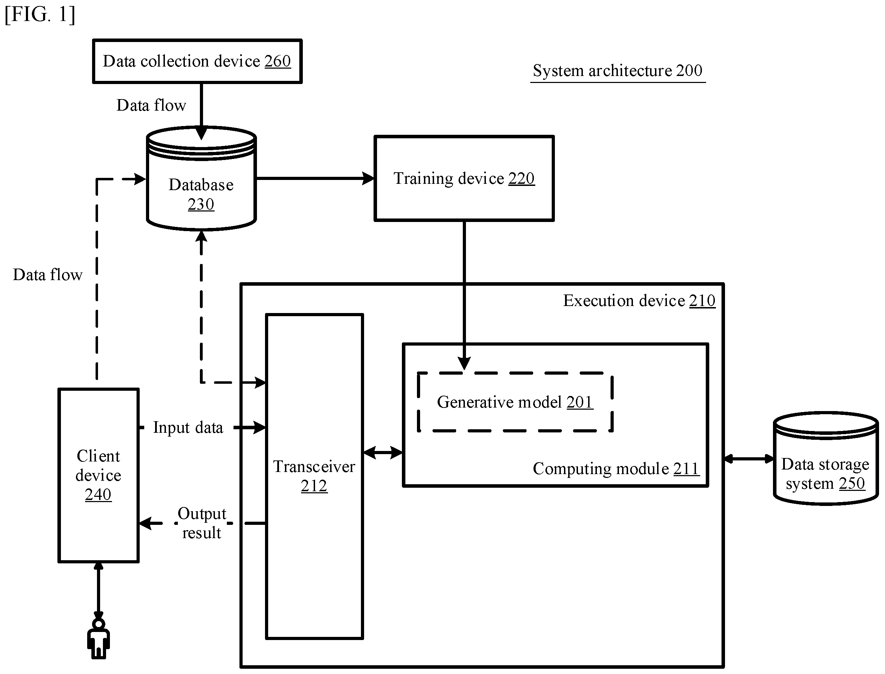

Refer to FIG. 1. An embodiment of this application provides a system architecture 200. As shown in the system architecture 200, a data collection device 260 may be configured to collect training data. After collecting the training data, the data collection device 260 stores the training data in a database 230. A training device 220 obtains a generative model 201 through training based on the training data maintained in the database 230.

The following describes a process in which the training device 220 obtains the generative model 201 based on the training data. For example, the training device 220 constructs the generative model based on an attribute heterogeneity graph, and updates a parameter of the generative model through comparison learning, to complete training of the generative model 201. For details, refer to the training method in the following.

The generative model 201 in this embodiment of this application may specifically be a neural network. It should be noted that, in actual application, the training data maintained in the database 230 is not necessarily collected by the data collection device 260, and may alternatively be received from another device. In addition, it should be noted that the training device 220 may not train the generative model 201 entirely based on the training data maintained in the database 230, and may train the model by obtaining training data from a cloud or another place. The foregoing description should not be construed as a limitation to embodiments of this application.

The generative model 201 obtained through training by the training device 220 may be used in different systems or devices, for example, an execution device 210 shown in FIG. 1. The execution device 210 may be a terminal, for example, a mobile phone terminal, a tablet computer, a laptop computer, an augmented reality (augmented reality, AR)/virtual reality (virtual reality, VR) device, a vehicle-mounted terminal, or a television, or may be a server, a cloud, or the like. In FIG. 1, the execution device 210 is configured with a transceiver 212. The transceiver may include an input/output (input/output, I/O) interface or another wireless or wired communication interface, and is configured to exchange data with an external device. The I/O interface is used as an example. A user may input data to the I/O interface via a client device 240.

In a process in which the execution device 210 preprocesses the input data, or in a process in which a computing module 211 of the execution device 210 performs related processing like calculation, the execution device 210 may call data, code, and the like in a data storage system 250 for corresponding processing; and may also store, in the data storage system 250, data, instructions, and the like that are obtained through corresponding processing.

Finally, the I/O interface returns a processing result to the client device 240, to provide the processing result for the user.

It should be noted that the training device 220 may generate, based on different training data, corresponding generative models 201 for different targets or different tasks. The corresponding generative models 201 may be used to implement the foregoing targets or complete the foregoing tasks, thereby providing a desired result for the user.

In a case shown in FIG. 1, the user may manually specify the input data, and the input data may be manually specified through an interface provided by the transceiver 212. In another case, the client device 240 may automatically send the input data to the transceiver 212. If it is required that the client device 240 needs to obtain a grant from the user for automatically sending the input data, the user may set corresponding permission in the client device 240. The user may view, on the client device 240, a result output by the execution device 210. Specifically, the result may be presented in a form of display, a sound, an action, or the like. The client device 240 may also be used as a data collection end to collect, as new sample data, the input data that is input to the transceiver 212 and an output result that is output from the transceiver 212 shown in the figure, and store the new sample data in the database 230. Certainly, the client device 240 may alternatively not perform collection, but the transceiver 212 directly stores, as new sample data in the database 230, the input data that is input to the transceiver 212 and the output result that is output from the transceiver 212 that are shown in the figure.

It should be noted that FIG. 1 is merely a diagram of a system architecture according to an embodiment of this application. A position relationship between a device, a component, a module, and the like shown in the figure constitutes no limitation. For example, in FIG. 1, the data storage system 250 is an external memory relative to the execution device 210. In another case, the data storage system 250 may alternatively be disposed in the execution device 210.

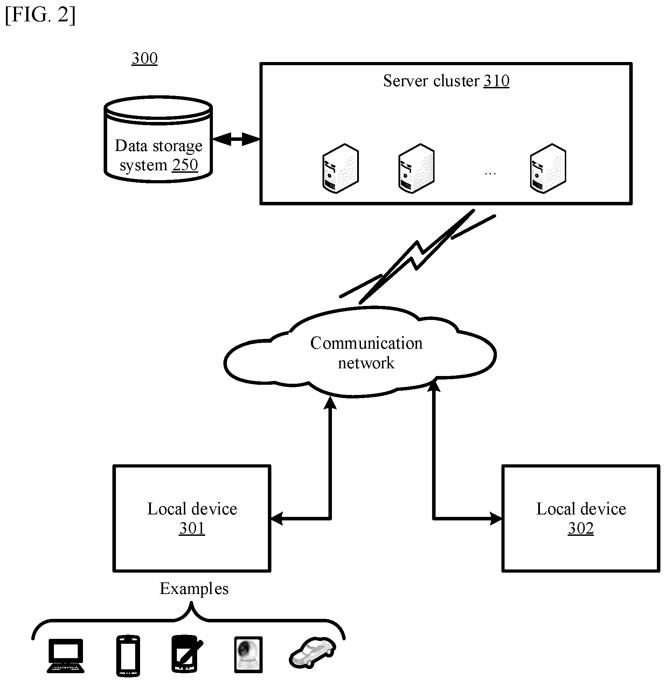

For example, a system architecture to which a generative model construction method provided in this application is applied may be shown in FIG. 2. In a system architecture 300, a server cluster 310 is implemented by one or more servers. Optionally, the server cluster 310 cooperates with another computing device, for example, a device like a data storage, a router, or a load balancer. The server cluster 310 may implement the steps of the generative model construction method provided in this application by using the data in the data storage system 250 or by calling program code in the data storage system 250.

A user may operate respective user equipment (for example, a local device 301 and a local device 302) to interact with the server cluster 310. Each local device may be any computing device like a personal computer, a computer workstation, a smartphone, a tablet computer, an intelligent camera, an intelligent vehicle, another type of cellular phone, a media consumption device, a wearable device, a set-top box, or a game console.

A local device of each user may interact with the server cluster 310 via a communication network of any communication mechanism/communication standard. The communication network may be a wide area network, a local area network, a point-to-point connection, or any combination thereof. Specifically, the communications network may include a wireless network, a wired network, a combination of a wireless network and a wired network, or the like. The wireless network includes but is not limited to any one or more of a 5th generation (5th Generation, 5G) mobile communication technology system, a long term evolution (long term evolution, LTE) system, a global system for mobile communications (global system for mobile communications, GSM), a code division multiple access (code division multiple access, CDMA) network, a wideband code division multiple access (wideband code division multiple access, WCDMA) network, wireless fidelity (wireless fidelity, Wi-Fi), Bluetooth (Bluetooth), ZigBee (ZigBee), a radio frequency identification (radio frequency identification, RFID) technology, long range (Long Range, Lora) wireless communication, and near field communication (near field communication, NFC). The wired network may include an optical fiber communication network, a network including coaxial cables, or the like.

In another implementation, one or more aspects of the execution device 210 may be implemented by each local device. For example, the local device 301 may provide local data or feed back a computation result for the execution device 210.

It should be noted that all functions of the execution device 210 may alternatively be implemented by the local device. For example, the local device 301 implements a function of the execution device 210 and provides a service for a user of the local device 301, or provides a service for a user of the local device 302.

More specifically, a generative model training method provided in this application may be deployed on a local server, or may be deployed on a cloud, or may be deployed on a local terminal. A generative model obtained through training may be deployed on a terminal, a local server, a cloud server, or the like. For example, a training phase provided in this application may be deployed in a server, and the server trains a generative model to obtain the trained generative model. The model obtained through training may be deployed on a cloud platform, and the user may perform an input operation on a client, to obtain required data via the cloud platform.

AI services and products in a cloud domain not only reflect on-demand use and purchase of cloud services, but also feature abstraction, diversity, and wide application of AI technologies. There are two mainstream types of AI services in the cloud domain: a platform-as-a-service (Platform-as-a-Service, PaaS) basic AI development platform service and a software-as-a-service (Software-as-a-Service, SaaS) AI application cloud service.

For the first-type basic AI development platform service, a public cloud service provider provides a basic AI development platform for a user based on sufficient underlying resources and upper-layer AI algorithm capabilities of the cloud service provider. A built-in AI development framework and various built-in AI algorithms in the basic AI development platform can allow the user to quickly construct and develop, on the basic AI development platform, an AI model or AI application that meets a personalized requirement.

For the second-type AI application cloud service, a public cloud service provider provides a common AI application cloud service via the cloud platform, so that a user can easily use AI capabilities in various application scenarios.

For example, the public cloud basic AI development platform is a PaaS cloud service on the cloud platform, and is a software platform provided by the public cloud service provider for the user (also referred to as a tenant and an AI developer) to assist in AI model construction, training, and deployment, and AI application development and deployment based on a large quantity of basic resources and software capabilities owned by the public cloud service provider.

For example, the generative model training method provided in this application may be deployed and executed by the server. The generative model obtained through training may be deployed on the cloud platform, and may be called in a form of an application programming interface (API) for which the user is charged. Specifically, for example, the method provided in this application may be deployed on the cloud platform to provide the service for the user, and provide, for the user, the API through which the service is called. The user may call the service through the API, and input related information of data that needs to be generated, for example, input text that needs to be converted into an image, text that needs to be converted into a speech, or an image that needs to be improved in resolution. Required data is generated for the user by using the service, to improve user experience.

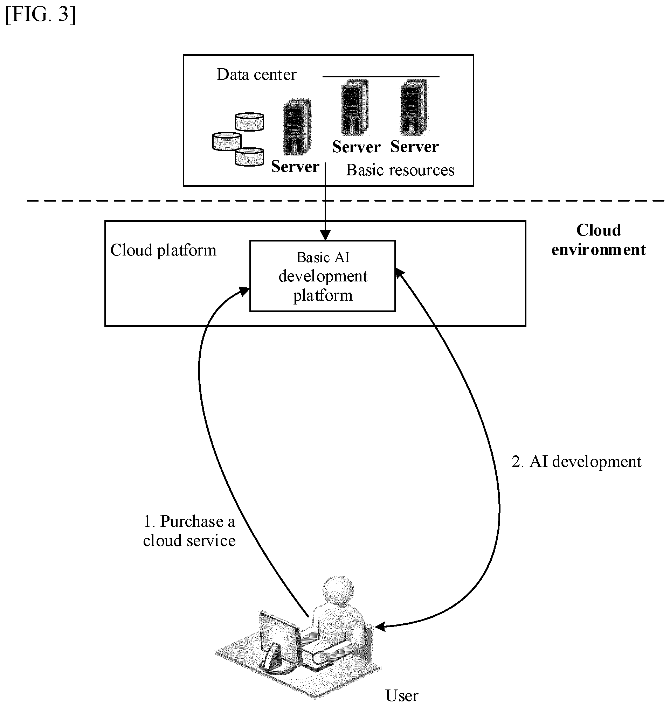

As shown in FIG. 3, a form of interaction between the user and the basic AI development platform mainly includes: The user logs in to the cloud platform through a client web page, and selects and purchases a cloud service of the basic AI development platform on the cloud platform. The user can perform a full-process AI service based on a function provided by the basic AI development platform.

The user develops and trains an AI model on the basic AI development platform based on basic resources (which are mainly computing resources such as a CPU, a GPU, and an NPU) in a data center of the cloud service provider.

Generally, basic resources supporting any process on the AI platform may be distributed on different physical devices. To be specific, hardware devices that actually execute a process are usually server clusters in a same data center, or server clusters distributed in different data centers. These data centers may be central cloud data centers of the cloud service provider, or may be edge data centers provided by the cloud service provider for the user. For example, in a scenario in which a public cloud and a private cloud are combined, resources in the public cloud are used to run model training and model management functions provided by the basic AI development platform, and resources in the private cloud are used to run data storage and data preprocessing functions provided by the basic AI development platform. In this way, user data can be more secure. In this scenario, the resource in the public cloud may come from the central cloud data center, and the resource in the private cloud may come from the edge data center.

It may be understood that the AI platform may be independently deployed on a server or a virtual machine in a data center in a cloud environment, or the AI platform may be deployed on a plurality of servers in a data center in a distributed manner, or may be deployed on a plurality of virtual machines in a data center in a distributed manner.

In another embodiment, the AI platform provided in this application may be further deployed in different environments in the distributed manner. The AI platform provided in this application may be logically divided into a plurality of parts, and each part has a different function. For example, a part of an AI platform 100 may be deployed in a computing device in an edge environment (which is also referred to as an edge computing device), and another part may be deployed in a device in a cloud environment. The edge environment is an environment whose geographical location is close to a terminal computing device of the user. The edge environment includes an edge computing device, for example, an edge small cell having a computing capability or an edge server. Parts of the AI platform 100 deployed in different environments or devices collaborate to provide a function like training the AI model for the user.

The generative model is applied in a plurality of scenarios. A GAN and a generative diffusion model are commonly used generative models, for example, may be used to perform, for example, high-resolution image generation, text-to-image conversion, text-to-speech conversion, and speech generation.

Some commonly used generative model training manners are used as examples.

A mutual game between a discrimination network and a generative network is introduced to an implicit generative model represented by the GAN, and transformation from noise to data distribution is learned through adversarial training. Advantages are high generation quality, a small model, a high generation speed, and low deployment costs. Disadvantages are introduced with adversarial training, an optimization process is unstable, the training is easy to collapse and sensitive to a hyperparameter, and generation diversity is insufficient. For example, a SOTA implicit generative model is used to design a larger implicit generative network, and training is performed by using a conventional adversarial training method. However, the training is very sensitive to hyperparameter selection, and it is difficult to optimize training. A complex regularization technology is required to stabilize training.

The generative diffusion model relies on a diffusion probabilistic process, and two pieces of distribution are narrowed through noise addition to reduce learning difficulty. A noise addition process causes data to lose original information until the data becomes white noise. When data is generated, a diffusion probabilistic model performs a reverse process of learning the noise addition, that is, a denoising process is obtained. The denoising process enables the data to be restored gradually until the data is restored to normal and clean data. Advantages of the generative diffusion model are stable training, accurate learning of data distribution, and amazing effect on a plurality of generation tasks. A disadvantage is obvious, that is, high computing overheads. An optimal model usually requires more than 1 GB memory. Model sampling also requires N iterations. In practice, an order of magnitude of N is usually hundreds to thousands. When N=1000, overheads of the diffusion probabilistic model is 1000 times that of the generative adversarial network.

For example, a SOTA generative diffusion model diffuses data by using a diffusion process, and uses a score function network to fit score functions of diffusion data distribution at a plurality of diffusion degrees. The solution finally outputs one score function network. A data generation process is implemented through repeated and iterative operations of the score function network. However, the model (score function network) has a large quantity of parameters, and usually requires more than 1 GB storage space. A generation speed is slow, and generating a single picture requires thousands of steps of large-scale network fronthaul operations.

For another example, a process in which an implicit model is used to accelerate generation of a diffusion model attempts to introduce the implicit generative model as a component into a structure of the diffusion model. A conditional implicit generative model is used to model a reverse process of the diffusion probabilistic model, to improve generation efficiency of the diffusion probabilistic model. The solution uses a conditional generative network to model a long-distance diffusion process of the diffusion probabilistic model, so that a disadvantage of performing repeated iterations can be partially alleviated when the diffusion probabilistic model is run. However, the conditional generative network still relies on a conventional adversarial training manner for training, and the training is unstable and easy to fail.

For another example, assisting adversarial training with the diffusion process (diffusion-GAN) tries to introduce the diffusion process into implicit generative model training, which has better generation effect than the conventional GAN method. The method diffuses data distribution and generation distribution in a random process, and performs adversarial training on diffused data. However, in this manner, adversarial training is still used, and training is still unstable, and the training may fail.

Therefore, this application provides a generative model training method, to obtain a generative model that has good generation effect, high diversity, stable training, efficient sampling, and convenient deployment. It may be understood that this application provides a non-adversarial implicit generative model training framework based on a diffusion process, which can overcome a disadvantage of an existing solution and has great value.

With reference to the foregoing architecture, the following describes the generative model training method provided in this application.

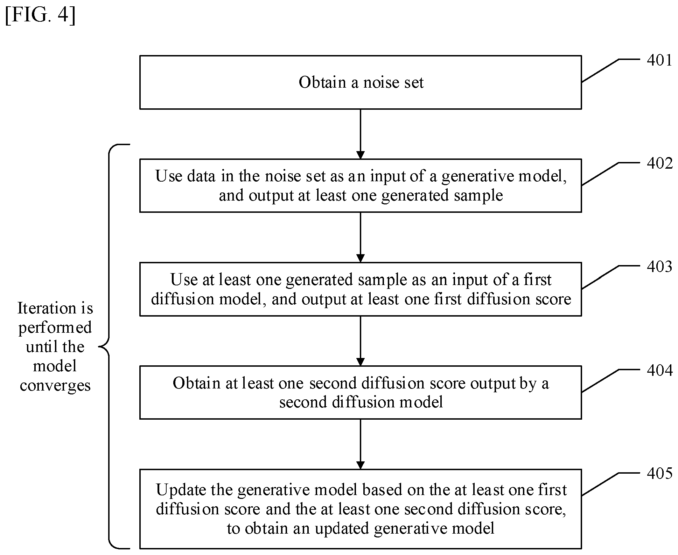

Refer to FIG. 4. This application provides a generative model training method. Details are as follows.

401: Obtain a noise set.

The noise set may include multi-frame noise data. The multi-frame noise data may include randomly generated data, or may include received data sent by another device, or may include data randomly input by a user, or the like.

Generally, the data in the noise set includes a type of input data of a to-be-trained generative model. For example, the input data type of the generative model may include text, an image, a speech, or another data type, and correspondingly, a data type of noise data in a noise set may also include text, an image, a speech, another data type, or the like.

If the type of the input data of the generative model is the text, the data type of the noise data in the noise data set is also the text. If the type of the input data of the generative model is the image, the type of the noise data in the noise data set may also include the image. If the input data of the generative model includes the speech, the type of the noise data in the noise data set may also include the speech.

Generally, the generative model may be iteratively updated for a plurality of times. The following uses one iterative update as an example for description, that is, the following step 402 to step 405 may be iteratively performed.

402: Use the data in the noise set as an input of the generative model, and output at least one generated sample.

A feature extractor for an image, a speech, and text may be set in the generative model. After the noise set is obtained, the noise data in the noise set may be used as the input of the generative model, a feature is extracted from the input noise data by using the generative model, corresponding data is generated based on the feature, and the at least one generated sample is output. Certainly, the feature may also be extracted from the input data by using another feature extraction model, and then input to the generative model to complete a generation step. Generally, tasks that can be executed by the generative model may include one or more of converting input text into an image, converting an input speech into an image, supplementing an input image with data, converting input text into a speech, or converting resolution of an input image.

For example, if the generative model is used to convert the input text into the image, and the data in the noise set includes multi-frame text data, the text may be converted into a representation vector by using the generative model, an image feature is extracted from the representation vector, and the corresponding image is generated based on the image feature. For example, if the input text includes "animal and cat", the text may be converted into a data type that can be processed by a neural network, that is, converted into an embedding (embedding) representation. An image feature is extracted from the embedding representation, and an image including a cat is generated. For another example, if the generative model is used to supplement the input image, the data in the noise set may include a plurality of frames of images. An image in the noise set may be used as the input of the generative model, a feature is extracted from the image by using the generative model, and a pixel value of a pixel that needs to be supplemented is inferred based on the feature, to obtain a supplemented image.

For another example, if the generative model is used to convert the input speech into the image, the noise set may include multi-frame speech data. The speech data is used as the input of the generative model, a semantic feature of the speech data is identified by using the generative model, and processing is performed based on the extracted feature, to generate the corresponding image. 403: Use at least one generated sample as an input of a first diffusion model, and output at least one first diffusion score.

In a process of training the generative model, at least two diffusion models need to be introduced.

Herein, for ease of differentiation, the at least two diffusion models are the first diffusion model and a second diffusion model.

After the at least one generated sample output by the generative model is obtained, the at least one generated sample may be used as the input of the first diffusion model. The first diffusion model may be used to: diffuse the input generated sample for at least one time, and output, by using a score function, a score on data obtained through each time of diffusion, to obtain at least one diffusion score, which is referred to as a first diffusion score for ease of differentiation. The first diffusion score may include a gradient of a logarithmic probability density function used during diffusion to an independent variable, and may be understood as representing probability distribution.

404: Obtain at least one second diffusion score output by the second diffusion model.

A difference between the first diffusion model and the second diffusion model usually lies in that parameters of the models are different. For example, in a process of separately training the first diffusion model and the second diffusion model, used input data is different, and implemented training effect is different. Therefore, the parameters of the first diffusion model and the second diffusion model are different.

Optionally, the second diffusion model may be a model pre-trained based on a real sample set, or may be a model that is synchronously trained by using a real sample set as an input in a process of training the generative model.

It should be understood that the real sample set mentioned in this application may be understood as a sample pair. For example, if the generative model is used to generate an image based on text, the real sample set may include a plurality of sample pairs, and each sample pair may include the text and one or more frames of images corresponding to the text. If the generative model is used to generate an image based on a speech, each sample pair may include the speech and one or more frames of corresponding images. If the generative model is used to improve image resolution, each sample pair may include a low-resolution image, a high-resolution image, and the like. The rest may be deduced by analogy.

If the second diffusion model is a model obtained through pre-training, a diffusion step size during training of the first diffusion model may be the same as a step size during training of the second diffusion model, so that a second diffusion score that is of a same scale as each diffusion step size in the first diffusion model may be directly extracted from the second diffusion model.

If the second diffusion model is trained synchronously in the process of training the generative model, a sample in the real sample set may be used as an input of the second diffusion model, and the at least one second diffusion score may be output. Diffusion step sizes used by the first diffusion model and the second diffusion model may be the same.

Generally, when the first diffusion model and the second diffusion model separately diffuse an input sample, diffusion may be performed by using the same step size. In each diffusion process, a scale of data obtained through noise addition is usually the same, so that a loss value can be subsequently calculated at a same scale, thereby improving training stability and model convergence efficiency.

For example, a diffusion process of any generated sample is used as an example, and is referred to as a first generated sample for ease of differentiation. The first diffusion model may perform noise addition on the first generated sample based on a preset step size, to obtain at least one first noise sample, and then output a corresponding at least one first diffusion score by using a first score function in the first diffusion model. Correspondingly, when the sample in the real sample set is used as the input of the second diffusion model, the second diffusion model may perform noise addition on the sample based on the preset step size, to obtain at least one second noise sample; and use the at least one second noise sample as an input of a second score function, and obtain the at least one second diffusion score.

405: Update the generative model based on the at least one first diffusion score and the at least one second diffusion score, to obtain an updated generative model.

The first diffusion model may be updated based on the at least one first diffusion score, to obtain an updated first diffusion model. Then, the generated sample may be used as an input of the updated first diffusion model, and at least one new diffusion score is output. For ease of differentiation, the at least one new diffusion score is referred to as a third diffusion score. The at least one third diffusion score is in one-to-one correspondence with the at least one second diffusion score, and a loss value may be calculated based on a difference between each of the at least one third diffusion score and a corresponding second diffusion score. In addition, the generative model is reversely updated based on the loss value, to obtain the updated generative model.

A plurality of times of iterative training may be performed, that is, step 402 to step 405 are performed for a plurality of times until the model is converged. A convergence condition of the model may include but is not limited to one or more of the following: a quantity of iterations reaches a preset quantity, iteration duration reaches preset duration, a difference between the output of the first diffusion model and the output of the second diffusion model is within a preset range, a change value of a loss function is not greater than a preset change value, and the like. This may be specifically selected based on an actual application scenario.

In this implementation of this application, the first diffusion model that is updated based on output data of a to-be-trained generative model may be set, and the second diffusion model is a model obtained through training based on the real sample set. The loss value is calculated based on the difference between the output of the first diffusion model and the output of the second diffusion model, and the generative model is updated. This is equivalent to that the second diffusion model is used as a teacher model, and the first diffusion model is used as a student model, to perform knowledge distillation. Therefore, no adversarial training is required, and stable and efficient training can be implemented. When the first diffusion model and the second diffusion model separately diffuse the input sample for a plurality of times, according to the method provided in this application, score functions between real data distribution and generated data distribution may be matched on a plurality of diffusion scales, to implement efficient non-adversarial training of an implicit generative model.

In a possible implementation, if the second diffusion model is updated in the process of training the generative model, the second diffusion model may be further updated before the generative model is updated. Specifically, the sample in the real sample set may be used as the input of the second diffusion model, and at least one fourth diffusion score is output. The second diffusion model is updated based on the at least one fourth diffusion score, to obtain an updated second diffusion model. Then, the sample in the real sample set is used as an input of the updated second diffusion model, and the at least one second diffusion score is output. It is equivalent to that in a process of training a generative network, the score function may be estimated in real time by using the second diffusion model, and the generative network is updated by using the learned score function, thereby implementing stable update of the generative network.

The foregoing describes a procedure of the generative model training method provided in this application. For ease of understanding, the procedure of the generative model training method provided in this application is described in more detail below with reference to a specific application scenario.

First, in the generative model training method provided in this application, the second diffusion model may be synchronously trained, or the second diffusion model may be obtained through pre-training before the generative model is trained. The following describes the generative model training method provided in this application from dimensions of different training manners.

### 1: The second diffusion model is synchronously trained.

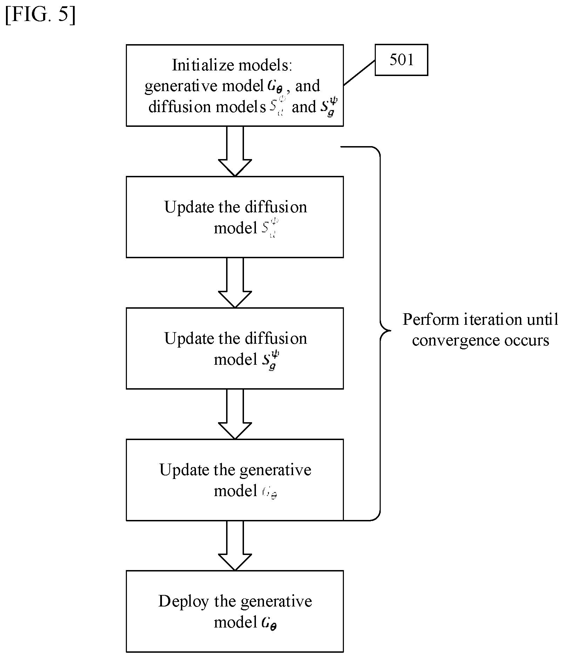

FIG. 5 is a schematic flowchart of another generative model training method according to this application.

First, parameters of models are initialized, and the models include a generative model $G_\theta$ and diffusion models $S_d^\phi$ and $S_g^\psi$.

Then, iterations are performed until the model converges. In each iteration process, the diffusion models $S_d^\phi$ and $S_g^\psi$ may be updated, and the generative model $G_\theta$ may be updated based on updated diffusion models $S_d^\phi$ and $S_g^\psi$. The model convergence may be determined in a plurality of manners, for example, a quantity of iterations reaches a preset quantity, iteration duration reaches preset duration, a difference between outputs of the diffusion models $S_d^\phi$ and $S_g^\psi$ is within a preset range, and a change value of a loss function is not greater than a preset change value. This may be specifically selected based on an actual application scenario.

Then, a converged generative model $G_\theta$ is deployed. For example, the generative model $G_\theta$ is deployed on a cloud platform, and a user is provided with a server in a form of a client. Alternatively, the generative model $G_\theta$ is deployed on a local server or terminal of a user, and the user may perform data conversion locally.

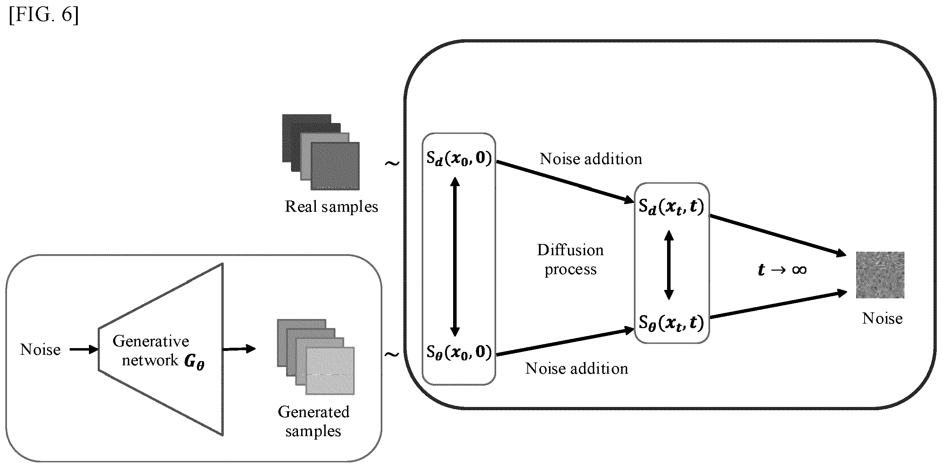

A training process is described in detail with reference to FIG. 6.

First, initialized data is given.

A plurality of network structures may be used for the generative model $G_\theta$, and may be usually selected based on an actual task that needs to be executed. For example, a network that meets a hardware load range of a computing device may be constructed, or a common network architecture like U-Net, a CNN, or an RNN may be selected. This may be specifically determined based on an actual application scenario.

A same diffusion process may be used for the diffusion models $S_d^\phi$ and $S_g^\psi$, for example, represented as $p(x_t|x_0)$. The diffusion process may be understood as a process of performing noise addition on a sample, for example, represented as $dX_t = f(x, t)dt + g(t)dW_t$. $S_d^\phi$ is a score function of a real sample, and a parameter of the model may be

represented as $\phi$, including a weight parameter, a network parameter, or the like. $S_g^{\psi}$ is a score function of a generated sample, and a parameter of the model may be represented as $\psi$, including a weight parameter, a network parameter, or the like.

For example, an image data set may be collected, and a StyleGAN 3 network architecture is selected as an architecture of the generative model. A diffusion manner like Gaussian diffusion, variance preserving (variance preserving, VP), or variance exploding (variance exploding, VE) may be selected for the diffusion process of the diffusion model.

T=1000 steps may be selected as a diffusion step size. A score function $S_d^{\phi}(x_t, t)$ of real data and a score function $S_g^{\psi}(x_t, t)$ of generated data may be selected for a network of the U-Net architecture, and parameters of each model are initialized.

Then, training is performed. In the training process, input samples required by the diffusion models $S_d^{\phi}$ and $S_g^{\psi}$ need to be obtained first. The input sample of $S_d^{\phi}$ is the real data like an image, text, or a speech. The input sample of $S_g^{\psi}$ is a generated sample output by the generative model $G_{\theta}$. $G_{\theta}$ may receive a noise sample, the noise sample is used as an input of the generative model $G_{\theta}$, and a plurality of generated samples are output.

A training procedure may include updating the diffusion models $S_d^{\phi}$ and $S_g^{\psi}$, and updating the generative model $G_{\theta}$ based on the updated diffusion models $S_d^{\phi}$ and $S_g^{\psi}$. Steps of updating the diffusion models $S_d^{\phi}$ and $S_g^{\psi}$ may be synchronously performed, and are separately described in the following.

1. Update of the diffusion model $S_d^{\phi}$

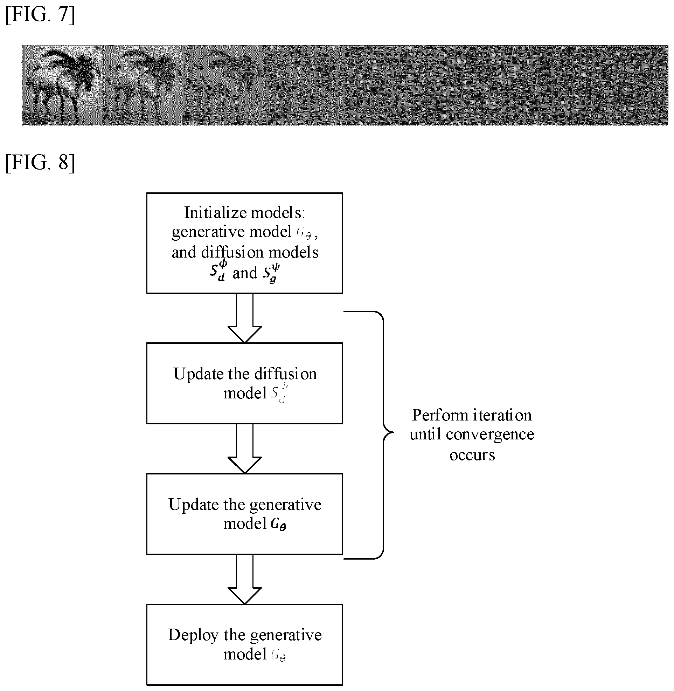

A same input sample may be diffused for a plurality of times by using the diffusion model, and the diffusion model $S_d^{\phi}$ is updated based on diffuse data obtained through each time of diffusion. For example, the sample input to the diffusion model is the image. For the diffusion process, refer to FIG. 7. In each time of diffusion, noise addition may be performed on an image obtained through a previous time of diffusion, until a quantity of diffusion times is reached or noise data is obtained. A diffusion moment $t \sim \text{Unif}[0, T]$ may be randomly selected, a real sample $x_0 \sim p_d$ is selected, and diffused data $x_t \sim p(x_t|x_0)$ is obtained through a diffusion probabilistic process.

Then, the loss function is calculated based on the diffused data. Specifically, the loss function may be a loss function like a minimization loss function, a mean square error loss function, a cross entropy loss function, a logarithm loss function, or an exponential loss function.

For example, the minimization loss function is used as an example, and is represented as:

$$L(\phi) = E_{x_0 \sim p_d, x_t \sim p(x_t|x_0)} || S_d^{\phi}(x_t, t) - \nabla_{x_t} \log p(x_t|x_0) ||^2$$

$\nabla_{x_t}$ indicates that a gradient is calculated for noise added in a current time of diffusion.

After $L(\phi)$ is calculated, a loss value may be used to perform reverse update, that is, update the parameter $\phi$, to obtain updated $S_d^{\phi}$.

2. Update of the diffusion model $S_g^{\psi}$

An update process of the diffusion model $S_g^{\psi}$ is similar to the update process of the diffusion model $S_d^{\phi}$, and a difference lies in that input samples are different.

A diffusion moment $t \sim \text{Unif}[0, T]$ is randomly selected, a generated sample $x_0 = G_{\theta}(z)$, $z \sim p_{prior}(z)$ is selected, and diffused data $x_t \sim p(x_t|x_0)$ is obtained through a diffusion probabilistic process. The minimization loss function is used to calculate a loss value, and is represented as:

$$L(\psi) = E_{x_0 = G_{\theta}(z), z \sim p_{prior}(z), x_t \sim p(x_t|x_0)} || S_g^{\psi}(x_t, t) - \nabla_{x_t} \log p(x_t|x_0) ||^2$$

After $L(\psi)$ is calculated, the loss value may be used to perform reverse update, that is, update the parameter $\psi$, to

obtain updated $S_d^{\psi}$ .

It should be noted that an update sequence of the diffusion models $S_d^{\phi}$ and $S_g^{\psi}$ is not limited in this application. $S_d^{\phi}$ may be updated first, or $S_g^{\psi}$ may be updated first, or $S_d^{\phi}$ and $S_g^{\psi}$ may be updated simultaneously. This may be specifically adjusted based on an actual application scenario.

This is not limited in this application.

3. Update of the generative model $G_\theta$

After the diffusion models $S_d^{\phi}$ and $S_g^{\psi}$ are updated, parameters of the diffusion models $S_d^{\phi}$ and $S_g^{\psi}$ in a current iteration may be fixed, that is, $\phi$ and $\psi$ are fixed. The generated data $x_0 = G_\theta(z)$, $z \sim p_{prior}(z)$ of the current training batch is obtained, and the diffused generated data $x_t \sim p(x_t|x_0)$ is obtained through probabilistic diffusion. The real sample is used as an input of the updated diffusion model $S_d^{\phi}$ for another time, and $S_d^{\phi}(x_t)$ is output. The generated sample is used as an input of updated $S_g^{\psi}$ for another time, and $S_g^{\psi}(x_t)$ is output.

The loss value is calculated, and is represented as:

$$ L(\theta) = E_{x_0 = G_\theta(z), z \sim p_{prior}(z), x_t \sim p(x_t|x_0)}[\, ||S_d^{\phi}(x_t)||^2 - ||S_g^{\psi}(x_t)||^2 \,] $$

After $L(\theta)$ is calculated, the loss value may be used to reversely update the generative model $G_\theta$, that is, update a parameter $\theta$, to obtain updated $G_\theta$.

In this implementation of this application, a plurality of diffusion models are set, and the diffusion models are separately trained based on the real sample and the generated sample. A distance between the real sample and the generated sample is shortened through noise addition in the diffusion process, so that the output of the diffusion model trained based on the generated sample matches the output of the diffusion model trained based on the real sample as much as possible. The generative model is reversely updated, so that an output value of the score function corresponding to the generated sample output by the generative model is closer to an output value of the score function corresponding to the real sample. In comparison with training performed in an adversarial training manner, in this application, the generative model is updated by matching the output values of the score functions, so that an optimization process is more stable, and efficient training can be implemented. In addition, the method provided in this application may be used for training in various generation scenarios, so that generation diversity can be implemented and a generalization capability is strong. In addition, training is performed in the manner provided in this application, and an output of the second diffusion model obtained through training based on the real sample may be used as a guide, so that the first diffusion model more efficiently learns the parameter of the score function, a more complex diffusion model structure is not required, and less storage space is occupied.

2: The second diffusion model is pre-trained.

FIG. 8 is a schematic flowchart of another generative model training method according to this application.

A difference between a procedure of pre-training the second diffusion model and the procedure in FIG. 5 lies in that in an implementation of this application, the second diffusion model may not need to be synchronously trained. A value of a score function of a corresponding scale may be directly extracted from the pre-trained second diffusion model, and is used as a guide to train the generative model.

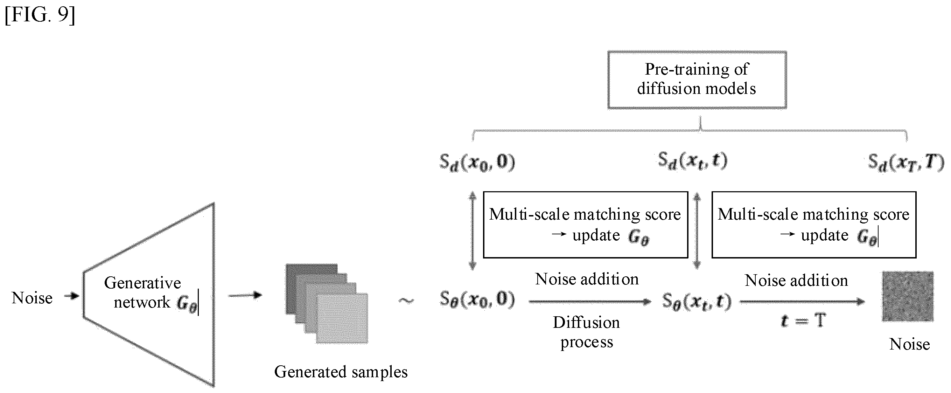

The following describes a specific training procedure. Refer to FIG. 9.

First, initialized data is given.

A plurality of network structures may be used for the generative model $G_\theta$, and may be usually selected based on an actual task that needs to be executed. For example, a network that meets a hardware load range of a computing device may be constructed, or a common network architecture like U-Net, a CNN, or an RNN may be selected. This may be specifically determined based on an actual application scenario.

A same diffusion process may be used for diffusion models $S_d^{\phi}$ and $S_g^{\psi}$. The diffusion model $S_d^{\phi}$ is a pre-trained model and does not need to be updated. The diffusion model may be represented as $p(x_t|x_0)$. The diffusion process may be understood as a process of performing noise addition on a sample, for example, represented as $dx_t = f(x, t)dt + g(t) dw_t$. $S_d^{\phi}$ is a score function of a real sample, and a parameter of the model may be represented as $\phi$, including a weight

parameter, a network parameter, or the like. $S_d^{\phi}$ does not need to be updated in this embodiment. $S_g^{\psi}$ is a score function of a generated sample, and a parameter of the model may be represented as

$\psi$, including a weight parameter, a network parameter, or the like.

For example, an image data set may be collected, and a StyleGAN 3 network architecture is selected as an architecture of the generative model. Gaussian diffusion may be selected for the diffusion process of the diffusion model.

T=1000 steps may be selected as a diffusion step size. A score function $S_d^{\phi}(x_t, t)$ of real data and a score function $S_g^{\psi}(x_t, t)$ of generated data may include a network of the U-Net architecture, and parameters of the generative model and $S_g^{\psi}$ are initialized.

Then, training is performed. In the training process, an input sample required by the diffusion model $S_g^{\psi}$ needs to be obtained first. The input sample of $S_g^{\psi}$ is a generated sample output by the generative model $G_{\theta}$. A sample may be randomly generated or a noise sample may be received, the noise sample is used as an input of the generative model $G_{\theta}$, and a plurality of generated samples are output.

A training procedure may include updating the diffusion model $S_g^{\psi}$, and updating the generative model $G_{\theta}$ based on an output of pre-trained $S_d^{\phi}$ and an output of an updated diffusion model $S_g^{\psi}$. Steps of updating the diffusion model $S_g^{\psi}$ and updating the generative model $G_{\theta}$ may be synchronously performed, which are separately described in the following.

1. Update of the diffusion model $S_g^{\psi}$

A diffusion moment t ~ Unif[0, T] is randomly selected, a generated sample $x_0 = G_{\theta}(z)$, z ~ $p_{prior}(z)$ is selected, and diffused data $x_t$ ~ $p(x_t|x_0)$ is obtained through a diffusion probabilistic process. A minimization loss function is used to calculate a loss value, and is represented as:

$$L(\psi) = E_{x_0 = G_{\theta}(z), z \sim p_{prior}(z), x_t \sim p(x_t|x_0)} || S_g^{\psi}(x_t, t) - \nabla_{x_t} log\, p(x_t|x_0) ||^2$$

After $L(\psi)$ is calculated, the loss value may be used to perform reverse update, that is, update the parameter $\psi$, to obtain updated $S_d^{\psi}$.

2. Update of the generative model $G_{\theta}$

After the diffusion model $S_g^{\psi}$ is updated, parameters of the diffusion models $S_d^{\phi}$ and $S_g^{\psi}$ in a current iteration may be fixed, that is, $\phi$ and $\psi$ are fixed. The generated data $x_0 = G_{\theta}(z)$, z ~ $p_{prior}(z)$ of the current training batch is obtained, and the diffused generated data $x_t$ ~ $p(x_t|x_0)$ is obtained through probabilistic diffusion. The real sample is used as an input of the updated diffusion model $S_d^{\phi}$ for another time, and $S_d^{\phi}(x_t)$ is output. The generated sample is used as an input of updated $S_g^{\psi}$ for another time, and $S_g^{\psi}(x_t)$ is output.

The loss value is calculated, and is represented as:

$$L(\theta) = E_{x_0 = G_{\theta}(z), z \sim p_{prior}(z), x_t \sim p(x_t|x_0)} [\, ||S_d^{\phi}(x_t)||^2 - ||S_g^{\psi}(x_t)||^2 \,]$$

After $L(\theta)$ is calculated, the loss value may be used to reversely update the generative model $G_{\theta}$, that is, update a parameter $\theta$, to obtain updated $G_{\theta}$.

For example, a DELLE-2 model is used as an example. A generative diffusion model is used in a part of an image generator, and a generation process of the DELLE-2 model usually takes long time. Therefore, knowledge distillation may be performed on a generator module of the trained DELLE-2 model, and a distillation target may be an implicit generative network StyleGAN-XL, which can greatly improve a generation speed while maintaining generation effect.

In this implementation of this application, the pre-trained diffusion model may be used to guide the implicit generative model. This is equivalent to using the pre-trained diffusion model as a teacher model, and using the implicit generative model as a student model, to perform knowledge distillation, so that training costs of the generative model can be reduced. In addition, in a process of training the generative model, a few diffusion models may be trained, so that training efficiency of the generative model can be improved.

It may be understood that this application provides a new non-adversarial implicit generative model training manner based on a diffusion probabilistic process. The diffusion probabilistic process is introduced into implicit generative model training, and score functions between real data and generated data distribution are matched on a plurality of diffusion scales, to implement efficient non-adversarial training of an implicit generative model.

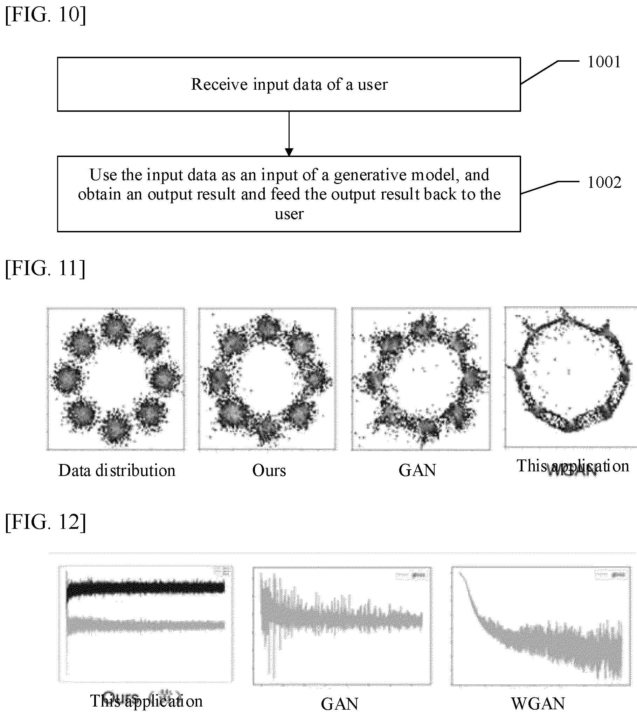

The foregoing describes the generative model training method provided in this application. A trained generative model may be deployed on a cloud, a local server, or a local terminal. The following describes in detail effect of a data conversion method provided in this application and the foregoing generative model training method with reference to specific application scenarios. FIG. 10 is a schematic flowchart of a data conversion method according to this application. Details are as follows.

1001: Receive input data of a user.

A generative model may be deployed in a cloud device or a local device. When the generative model is deployed in the cloud device, the user may perform an input operation on a local client, for example, input text that needs to be converted into an image, and the client sends the text to the cloud, so that the cloud can receive the input data of the user. When the generative model is deployed on a local computing device, the user may input data to the local computing device via an input device.

1002: Use the input data as an input of the generative model, and obtain an output result and feed the output result back to the user.

After the input data is received, the input data may be used as the input of the generative model, and the output result is fed back to the user. The generative model may be used to perform data conversion, and may be obtained through training by using the steps corresponding to FIG. 4 to FIG. 9. For details, refer to the foregoing descriptions. Details are not described herein again. The generative model may include a feature extraction module, and tasks that can be executed may include one or more of converting input text into an image, converting an input speech into an image, supplementing an input image with data, converting input text into a speech, or converting resolution of an input image.

For example, if the generative model is used to convert the input text into the image, and data in a noise set includes multi-frame text data, the text may be converted into a representation vector by using the generative model, a feature is extracted from the representation vector, and the corresponding image is output based on the feature. For example, if the input text includes "animal and cat", the text may be converted into a data type that can be processed by a neural network, that is, converted into an embedding (embedding) representation. A feature is extracted from the embedding representation, and an image including a cat is generated.

For another example, if the generative model is used to supplement the input image, the data in the noise set may include a plurality of frames of images. An image in the noise set may be used as the input of the generative model, a feature is extracted from the image by using the generative model, and a pixel value of a pixel that needs to be supplemented is inferred based on the feature, to obtain a supplemented image.

For another example, if the generative model is used to convert the input speech into the image, the noise set may include multi-frame speech data. The speech data is used as the input of the generative model, a semantic feature of the speech data is identified by using the generative model, and processing is performed based on the extracted feature, to generate the corresponding image. After the generative model generates the output result based on the input data, the output result may be fed back to the user.

For example, if the generative model is deployed on the cloud, after the output result is obtained, the output result may be sent to the client of the user, and the output result may be displayed on the client of the user.

For another example, if the generative model is deployed in the local computing device, after the output result is obtained, the output result may be displayed on a display device disposed in the local computing device or a connected display device.

Therefore, in this implementation of this application, the generative model obtained through efficient training may be used to implement data conversion, so that better generation effect can be achieved. The implicit generative model has a lightweight feature. Therefore, deploying the generative model does not need to occupy more storage resources, can be applicable to a plurality of hardware devices, and has a strong generalization capability.

The following further describes, with reference to a specific implementation scenario, output effect of the generative model obtained through training.

The model obtained through training in this application is compared with common generative models. For example, the common generative models are a GAN and a WGAN. For fitting effect, refer to Table 1. Generation effect may be shown in FIG. 11, and trends of loss functions of the generative models may be shown in FIG. 12.

Table 1

|  | GAN | WGAN | This application |
|---|---|---|---|
| Fitting effect | 0.129 | 0.551 | **0.017** |

In comparison with an existing diffusion probabilistic model, when comparison can be performed on generation quality or likelihood estimation effect, the fitting effect and stability are improved in comparison with an implicit generative model obtained through adversarial training, and a generation speed is improved by hundreds of times in comparison with a diffusion model.

In addition, some specific generation processes of generating an image based on text are used as examples.

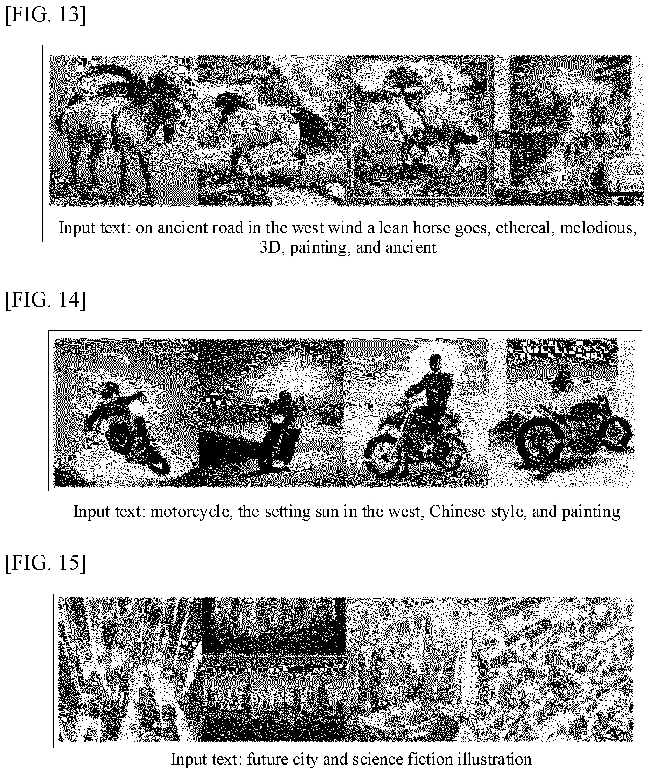

For example, as shown in FIG. 13, the user may perform input on the client, and input text may include "on ancient road in the west wind a lean horse goes, ethereal, melodious, 3D, painting, and ancient". A plurality of frames of corresponding output images may be output by using the generative model, and the generative model may extract features included in the input text. For example, entities "horse" and "ancient road", and a data type "painting" that needs to be converted may be included. In addition, the output images have high definition, and user experience is great. For example, as shown in FIG. 14, the user may perform input on the client, and input text may include "motorcycle, the setting sun in the west, Chinese style, and painting". A plurality of frames of corresponding output images may be output by using the generative model. For example, the plurality of frames of corresponding output images may be output by using the generative model. The generative model may extract features included in the input text. For example, entities "motorcycle" and "sunset", a data type "painting" that needs to be converted, and an image style "Chinese style" may be included. A plurality of features may be combined to generate a plurality of frames of images.

For example, as shown in FIG. 15, the user may perform input on the client, and input text may include "future city and science fiction illustration". A plurality of frames of corresponding output images may be output by using the generative model. For example, the plurality of frames of corresponding output images may be output by using the generative model. The generative model may extract features included in the input text. For example, an entity "city", a data type "illustration" that needs to be converted, and an image style "science fiction" may be included. A plurality of features may be combined to generate a plurality of frames of images.

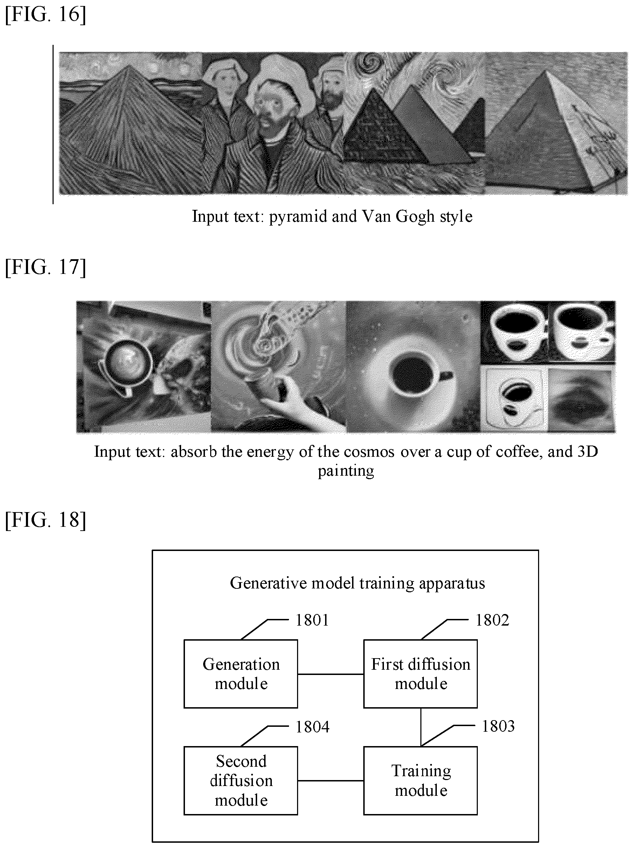

For example, as shown in FIG. 16, the user may perform input on the client, and input text may include "pyramid and Van Gogh style". A plurality of frames of corresponding output images may be output by using the generative model. For example, the plurality of frames of corresponding output images may be output by using the generative model. The generative model may extract features included in the input text. For example, an entity "pyramid" or "Van Gogh" may be included, and a data type to be converted may default to an image and an image style "Van Gogh style". A plurality of features may be combined to generate a plurality of frames of images.

For example, as shown in FIG. 17, the user may perform input on the client, and input text may include "absorb the energy of the cosmos over a cup of coffee, and 3D painting". A plurality of frames of corresponding output images may be output by using the generative model. For example, the plurality of frames of corresponding output images may be output by using the generative model. The generative model may extract features included in the input text. For example, entities "coffee", "cosmos", or "energy" may be included, and a data type to be converted may default to an image and an image style "3D painting". A plurality of features may be combined or the like to generate a plurality of frames of images.

The foregoing describes a procedure of the method provided in this application. The following describes, with reference to the foregoing method steps, an apparatus for performing the method steps.

FIG. 18 is a diagram of a structure of a generative model training apparatus according to this application. The generative model training apparatus includes:

a generation module 1801, configured to: use data in a noise set as an input of a generative model, and output at least one generated sample, where the generative model is used to perform data conversion on the input data, and the noise set includes multi-frame noise data;

a first diffusion module 1802, configured to: use the at least one generated sample as an input of a first diffusion model, and output at least one first diffusion score, where the first diffusion model is used to separately diffuse each generated sample for at least one time and score diffused data; and

a training module 1803, configured to update the generative model based on the at least one first diffusion score and at least one second diffusion score output by a second diffusion model, to obtain an updated generative model. The second diffusion model is obtained through training based on a real sample set, each sample in the real sample set includes a corresponding label, the second diffusion model is used to diffuse input data for at least one time and score diffused data, parameters of the first diffusion model and the second diffusion model are different, and the updated generative model is used to: extract a feature from data input by a user in a computing device, and generate corresponding data based on the extracted feature.

In a possible implementation, the training module 1803 is specifically configured to: update the first diffusion model based on the at least one first diffusion score, to obtain an updated first diffusion model; use the at least one generated sample as an input of the updated first diffusion model, and output at least one third diffusion score, where the at least one second diffusion score is in one-to-one correspondence with the at least one third diffusion score; obtain the at least one second diffusion score output by the second diffusion model; and update the generative model based on a loss value between each of the at least one third diffusion score and a corresponding second diffusion score, to obtain the updated generative model.

In a possible implementation, the apparatus further includes: a second diffusion module 1804, configured to: use the sample in the real sample set as an input of the second diffusion model, and output at least one fourth diffusion score.

The training module 1803 is further configured to: update the second diffusion model based on the at least one fourth diffusion score, to obtain an updated second diffusion model; and use the sample in the real sample set as an input of the updated second diffusion model, and output the at least one second diffusion score.

In a possible implementation, the second diffusion model is a model pre-trained based on the real sample set, and the training module 1803 is further configured to obtain the at least one second diffusion score from the second diffusion model.

In a possible implementation, the first diffusion model is used to: perform noise addition on a first generated sample based on a preset step size, to obtain the at least one first noise sample; and use the at least one first noise sample as an input of a first score function, and output the at least one first diffusion score.

In a possible implementation, when the sample in the real sample set is used as the input of the second diffusion model, the second diffusion model is used to: perform noise addition on the sample in the real sample set based on the preset step size, to obtain at least one second noise sample; and use the at least one second noise sample as an input of a second score function, and obtain the at least one second diffusion score.

In a possible implementation, the generative model is used to perform one or more of the following tasks: converting input text into an image, converting an input speech into an image, supplementing an input image with data, converting input text into a speech, or converting resolution of an input image.

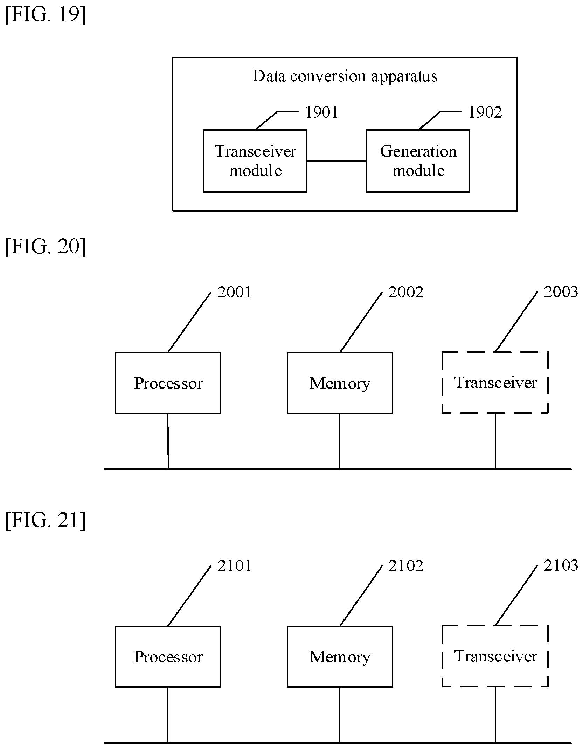

FIG. 19 is a diagram of a structure of a data conversion apparatus according to this application. The data conversion apparatus includes:

a transceiver module 1901, configured to receive input data, where the input data includes data input by a user; and
a generation module 1902, configured to use the input data as an input of a generative model, to obtain an output result, where the generative model is used to: extract a feature from the input data, and perform modeling based on the extracted feature, to obtain the output result.

The generative model is used to: extract the feature from the input data, and generate data of a preset type based on the extracted feature; the generative model is obtained through training based on output results of a first diffusion model and a second diffusion model; the first diffusion model is obtained by performing training based on an output sample of a generative model that is before training is completed; the second diffusion model is obtained through training based on a real sample set; each sample in the real sample set includes a corresponding label; the second diffusion model is used to: diffuse the input data for at least one time, and score diffused data; and parameters of the first diffusion model and the second diffusion model are different.

Specifically, the generative model may be obtained through training by using the procedures of the generative model training method corresponding to foregoing FIG. 4 to FIG. 17.

In a possible implementation, the generative model is used to perform one or more of the following tasks: converting input text into an image, converting an input speech into an image, supplementing an input image with data, converting input text into a speech, or converting resolution of an input image.

FIG. 20 is a diagram of a structure of another generative model training apparatus according to this application. Details are as follows.

The generative model training apparatus may include a processor 2001 and a memory 2002. The processor 2001 and the memory 2002 are interconnected through a line. The memory 2002 stores program instructions and data.

The memory 2002 stores the program instructions and the data corresponding to steps corresponding to FIG. 4 to FIG. 17.

The processor 2001 is configured to perform the method steps performed by the generative model training apparatus shown in any one of the foregoing embodiments in FIG. 4 to FIG. 17.

Optionally, the generative model training apparatus may further include a transceiver 2003, configured to receive or send data.

An embodiment of this application further provides a computer-readable storage medium. The computer-readable storage medium stores a program used to generate a vehicle travel speed. When the program is run on a computer, the computer is enabled to perform the steps in the methods described in embodiments shown in FIG. 4 to FIG. 17.

Optionally, the generative model training apparatus shown in FIG. 20 is a chip.

FIG. 21 is a diagram of a structure of another data conversion apparatus according to this application. Details are as follows.

The data conversion apparatus may include a processor 2101 and a memory 2102. The processor 2101 and the memory 2102 are interconnected through a line. The memory 2102 stores program instructions and data.

The memory 2102 stores the program instructions and the data corresponding to steps corresponding to FIG. 4 to FIG. 17.

The processor 2101 is configured to perform the method steps performed by the data conversion apparatus shown in any one of the foregoing embodiments in FIG. 4 to FIG. 17.

Optionally, the data conversion apparatus may further include a transceiver 2103, configured to receive or send data.

An embodiment of this application further provides a computer-readable storage medium. The computer-readable storage medium stores a program used to generate a vehicle travel speed. When the program is run on a computer, the computer is enabled to perform the steps in the methods described in embodiments shown in FIG. 4 to FIG. 17.

Optionally, the data conversion apparatus shown in FIG. 21 is a chip.

An embodiment of this application further provides a generative model training apparatus. The generative model training apparatus may also be referred to as a digital processing chip or a chip. The chip includes a processing unit and a communication interface. The processing unit obtains program instructions through the communication interface, and when the program instructions are executed by the processing unit, the processing unit is configured to perform the method steps performed by the generative model training apparatus in any one of the foregoing embodiments in FIG. 4 to FIG. 17.

An embodiment of this application further provides a data conversion apparatus. The data conversion apparatus may also be referred to as a digital processing chip or a chip. The chip includes a processing unit and a communication interface. The processing unit obtains program instructions through the communication interface, and when the program instructions are executed by the processing unit, the processing unit is configured to perform the method steps performed by the data conversion apparatus in any one of the foregoing embodiments in FIG. 4 to FIG. 17.

An embodiment of this application further provides a digital processing chip. A circuit and one or more interfaces that are configured to implement functions of the processor 2001 or the processor 2001 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, the actions performed by the generative model training apparatus in the foregoing embodiments.

The generative model training apparatus in this embodiment of this application may be a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, so that a chip in a server performs the generative model training method described in embodiments shown in FIG. 4 to FIG. 17. Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device that can store static information and instructions, a random access memory (random access memory, RAM), or the like.

An embodiment of this application further provides a digital processing chip. A circuit and one or more interfaces that are configured to implement functions of the processor 2101 or the processor 2101 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, the actions performed by the data conversion apparatus in the foregoing embodiments.

The data conversion apparatus in this embodiment of this application may be a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, so that a chip in a server performs the data conversion method described in embodiments shown in FIG. 4 to FIG. 17. Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device that can store static information and instructions, a random access memory (random access memory, RAM), or the like.

An embodiment of this application further provides a computer program product. When the computer program product runs on a computer, the computer is enabled to perform the steps performed by the image decompression apparatus or the image decompression apparatus in the methods described in embodiments shown in FIG. 4 to FIG. 17.

Specifically, the processing unit or the processor may be a central processing unit (central processing unit, CPU), a network processor (neural network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. A general purpose processor may be a microprocessor or any regular processor or the like.

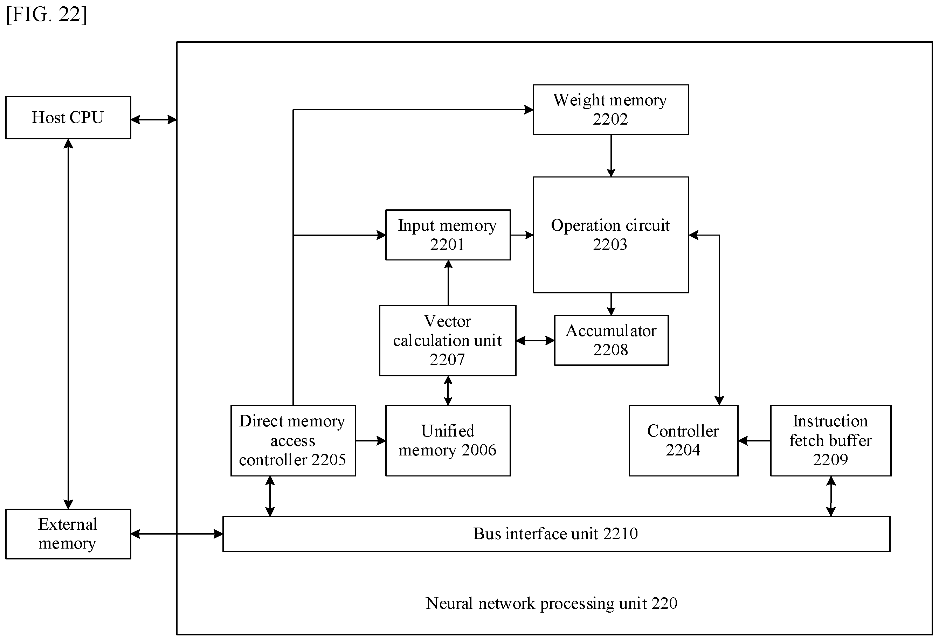

For example, FIG. 22 is a diagram of a structure of a chip according to an embodiment of this application. The chip may be represented as a neural network processing unit NPU 220. The NPU 220 is mounted to a host CPU (host CPU) as a coprocessor, and the host CPU allocates a task. A core part of the NPU is an operation circuit 2203, and a controller 2204 controls the operation circuit 2203 to extract matrix data in a memory and perform a multiplication operation.

In some implementations, the operation circuit 2203 includes a plurality of process engines (process engine, PE) inside. In some implementations, the operation circuit 2203 is a two-dimensional systolic array. The operation circuit 2203 may alternatively be a one-dimensional systolic array or another electronic circuit that can perform arithmetical operations such as multiplication and addition. In some implementations, the operation circuit 2203 is a general-purpose matrix processor.

For example, it is assumed that there is an input matrix A, a weight matrix B, and an output matrix C. The operation circuit fetches, from a weight memory 2202, data corresponding to the matrix B, and buffers the data on each PE in the operation circuit. The operation circuit fetches data of the matrix A from an input memory 2201, to perform a matrix operation on the matrix B, and stores an obtained partial result or an obtained final result of the matrix in an accumulator (accumulator) 2208.

A unified memory 2206 is configured to store input data and output data. Weight data is directly transferred to the weight memory 2202 by using a direct memory access controller (direct memory access controller, DMAC) 2205. The input data is also transferred to the unified memory 2206 by using the DMAC.

A bus interface unit (bus interface unit, BIU) 2210 is configured to interact with the DMAC and an instruction fetch buffer (instruction fetch buffer, IFB) 2209 through an AXI bus.

The bus interface unit (bus interface unit, BIU) 2210 is used by the instruction fetch buffer 2209 to obtain instructions from an external memory, and is further used by the direct memory access controller 2205 to obtain original data of the input matrix A or the weight matrix B from the external memory.

The DMAC is mainly configured to: transfer input data in the external memory DDR to the unified memory 2206, transfer weight data to the weight memory 2202, or transfer input data to the input memory 2201.

A vector calculation unit 2207 includes a plurality of operation processing units. If required, further processing is performed on an output of the operation circuit, for example, vector multiplication, vector addition, an exponential operation, a logarithmic operation, or value comparison. The vector calculation unit 2207 is mainly configured to perform network calculation at a non-convolutional/fully connected layer in a neural network, for example, batch normalization (batch normalization), pixel-level summation, and upsampling on a feature plane.

In some implementations, the vector calculation unit 2207 can save a processed output vector to the unified memory 2206. For example, the vector calculation unit 2207 may apply a linear function or a non-linear function to the output of the operation circuit 2203, for example, perform linear interpolation on a feature plane extracted at a convolutional layer. For another example, the linear function or the non-linear function is applied to a vector of an accumulated value to generate an activation value. In some implementations, the vector calculation unit 2207 generates a normalized value, a pixel-level summation value, or both. In some implementations, the processed output vector can be used as an activation input to the operation circuit 2203, for example, to be used at a subsequent layer in the neural network.

The instruction fetch buffer (instruction fetch buffer) 2209 connected to the controller 2204 is configured to store instructions used by the controller 2204.

The unified memory 2206, the input memory 2201, the weight memory 2202, and the instruction fetch buffer 2209 are all on-chip memories. The external memory is private for an NPU hardware architecture.

An operation at each layer in a recurrent neural network may be performed by the operation circuit 2203 or the vector calculation unit 2207.

The processor mentioned above may be a general-purpose central processing unit, a microprocessor, an ASIC, or one or more integrated circuits for controlling program execution of the methods in FIG. 3 to FIG. 5.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all of the modules may be selected based on an actual requirement to achieve the objectives of the solutions of embodiments. In addition, in the accompanying drawings of the apparatus embodiments provided in this application, connection relationships between the modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function performed by a computer program can be easily implemented by using corresponding hardware, and a specific hardware structure used to achieve a same function may be of various forms, for example, in a form of an analog circuit, a digital circuit, a dedicated circuit, or the like. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, or a network device) to perform the methods described in embodiments of this application.

All or some of foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

In this application, terms such as "first", "second", "third", and "fourth" (if exists) in the specification, the claims, and the accompanying drawings are intended to distinguish between similar objects but do not necessarily indicate a specific order or sequence. It should be understood that the data used in such a way are interchangeable in proper cases, so that embodiments described herein can be implemented in an order other than the order illustrated or described herein. Moreover, the terms "include", "have", and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

Finally, it should be noted that the foregoing descriptions are merely specific implementations of this application, but the protection scope of this application is not limited thereto. Any variation or replacement readily figured out by a person skilled in the art within the technical scope disclosed in this application shall fall within the protection scope of this application.

**Claims**

**1.** A generative model training method, comprising:

using data in a noise set as an input of a generative model, and outputting at least one generated sample, wherein the generative model is used to perform data conversion on the input data, and the noise set comprises multi-frame noise data;

using the at least one generated sample as an input of a first diffusion model, and outputting at least one first diffusion score, wherein the first diffusion model is used to separately diffuse each generated sample for at least one time and score diffused data; and

updating the generative model based on the at least one first diffusion score and at least one second diffusion score output by a second diffusion model, to obtain an updated generative model, wherein the second diffusion model is obtained through training based on a real sample set, each sample in the real sample set comprises a corresponding label, the second diffusion model is used to diffuse input data for at least one time and score diffused data, parameters of the first diffusion model and the second diffusion model are different, and the updated generative model is used to: extract a feature from data input by a user in a computing device, and generate corresponding data based on the extracted feature.

2. The method according to claim 1, wherein the updating the generative model based on the at least one first diffusion score and at least one second diffusion score output by a second diffusion model, to obtain an updated generative model comprises:

updating the first diffusion model based on the at least one first diffusion score, to obtain an updated first diffusion model;
using the at least one generated sample as an input of the updated first diffusion model, and outputting at least one third diffusion score, wherein the at least one second diffusion score is in one-to-one correspondence with the at least one third diffusion score;
obtaining the at least one second diffusion score output by the second diffusion model; and
updating the generative model based on a loss value between each of the at least one third diffusion score and a corresponding second diffusion score, to obtain the updated generative model.

3. The method according to claim 2, wherein the method further comprises:

using the sample in the real sample set as an input of the second diffusion model, and outputting at least one fourth diffusion score; and
updating the second diffusion model based on the at least one fourth diffusion score, to obtain an updated second diffusion model; and
the obtaining the at least one second diffusion score output by the second diffusion model comprises:
using the sample in the real sample set as an input of the updated second diffusion model, and outputting the at least one second diffusion score.

4. The method according to claim 2, wherein the second diffusion model is a model pre-trained based on the real sample set, and the obtaining the at least one second diffusion score output by the second diffusion model comprises:
obtaining the at least one second diffusion score from the second diffusion model.

5. The method according to any one of claims 1 to 4, wherein the first diffusion model is used to:

perform noise addition on a first generated sample based on a preset step size, to obtain the at least one first noise sample; and
use the at least one first noise sample as an input of a first score function, and output the at least one first diffusion score.

6. The method according to claim 5, wherein when the sample in the real sample set is used as the input of the second diffusion model, the second diffusion model is used to:

perform noise addition on the sample in the real sample set based on the preset step size, to obtain at least one second noise sample; and
use the at least one second noise sample as an input of a second score function, and obtain the at least one second diffusion score.

7. The method according to any one of claims 1 to 6, wherein
the generative model is used to perform one or more of the following tasks:
converting input text into an image, converting an input speech into an image, supplementing an input image with data, converting input text into a speech, or converting resolution of an input image.

8. A data conversion method, comprising:

receiving input data, wherein the input data comprises data input by a user; and
using the input data as an input of a generative model, to obtain an output result, wherein the generative model is used to: extract a feature from the input data, and perform modeling based on the extracted feature, to obtain the output result, wherein

the generative model is used to: extract the feature from the input data, and generate data of a preset type based on the extracted feature; the generative model is obtained through training based on output results of a first diffusion model and a second diffusion model; the first diffusion model is obtained by performing training based on an output sample of a generative model that is before training is completed; the second diffusion model is obtained through training based on a real sample set; each sample in the real sample set comprises a corresponding label; the second diffusion model is used to: diffuse the input data for at least one time, and score diffused data; and parameters of the first diffusion model and the second diffusion model are different.

9. The method according to claim 8, wherein the generative model is used to perform one or more of the following tasks: converting input text into an image, converting an input speech into an image, supplementing an input image with data, converting input text into a speech, or converting resolution of an input image.

10. A generative model training apparatus, comprising:

a generation module, configured to: use data in a noise set as an input of a generative model, and output at least one generated sample, wherein the generative model is used to perform data conversion on the input data, and the noise set comprises multi-frame noise data;

a first diffusion module, configured to: use the at least one generated sample as an input of a first diffusion model, and output at least one first diffusion score, wherein the first diffusion model is used to separately diffuse each generated sample for at least one time and score diffused data; and

a training module, configured to update the generative model based on the at least one first diffusion score and at least one second diffusion score output by a second diffusion model, to obtain an updated generative model, wherein the second diffusion model is obtained through training based on a real sample set, each sample in the real sample set comprises a corresponding label, the second diffusion model is used to diffuse input data for at least one time and score diffused data, parameters of the first diffusion model and the second diffusion model are different, and the updated generative model is used to: extract a feature from data input by a user in a computing device, and generate corresponding data based on the extracted feature.

11. The apparatus according to claim 10, wherein the training module is specifically configured to:

update the first diffusion model based on the at least one first diffusion score, to obtain an updated first diffusion model;

use the at least one generated sample as an input of the updated first diffusion model, and output at least one third diffusion score, wherein the at least one second diffusion score is in one-to-one correspondence with the at least one third diffusion score;

obtain the at least one second diffusion score output by the second diffusion model; and

update the generative model based on a loss value between each of the at least one third diffusion score and a corresponding second diffusion score, to obtain the updated generative model.

12. The apparatus according to claim 11, wherein the apparatus further comprises:

a second diffusion module, configured to: use the sample in the real sample set as an input of the second diffusion model, and output at least one fourth diffusion score, wherein

the training module is further configured to:

update the second diffusion model based on the at least one fourth diffusion score, to obtain an updated second diffusion model; and

use the sample in the real sample set as an input of the updated second diffusion model, and output the at least one second diffusion score.

13. The apparatus according to claim 11, wherein the second diffusion model is a model pre-trained based on the real sample set, and

the training module is further configured to obtain the at least one second diffusion score from the second diffusion model.

14. The apparatus according to any one of claims 10 to 13, wherein the first diffusion model is used to:

perform noise addition on a first generated sample based on a preset step size, to obtain the at least one first noise sample; and

use the at least one first noise sample as an input of a first score function, and output the at least one first diffusion score.

15. The apparatus according to claim 14, wherein when the sample in the real sample set is used as the input of the second diffusion model, the second diffusion model is used to:

perform noise addition on the sample in the real sample set based on the preset step size, to obtain at least one second noise sample; and

use the at least one second noise sample as an input of a second score function, and obtain the at least one second diffusion score.

16. The apparatus according to any one of claims 10 to 15, wherein
the generative model is used to perform one or more of the following tasks:
converting input text into an image, converting an input speech into an image, supplementing an input image with data, converting input text into a speech, or converting resolution of an input image.

17. A data conversion apparatus, comprising:

a transceiver module, configured to receive input data, wherein the input data comprises data input by a user; and
a generation module, configured to use the input data as an input of a generative model, to obtain an output result, wherein the generative model is used to:

extract a feature from the input data, and perform modeling based on the extracted feature, to obtain the output result, wherein
the generative model is used to: extract the feature from the input data, and generate data of a preset type based on the extracted feature; the generative model is obtained through training based on output results of a first diffusion model and a second diffusion model; the first diffusion model is obtained by performing training based on an output sample of a generative model that is before training is completed; the second diffusion model is obtained through training based on a real sample set; each sample in the real sample set comprises a corresponding label; the second diffusion model is used to: diffuse the input data for at least one time, and score diffused data; and parameters of the first diffusion model and the second diffusion model are different.

18. The apparatus according to claim 17, wherein the generative model is used to perform one or more of the following tasks: converting input text into an image, converting an input speech into an image, supplementing an input image with data, converting input text into a speech, or converting resolution of an input image.

19. A generative model training apparatus, comprising a processor, wherein the processor is coupled to a memory, the memory stores a program, and when program instructions stored in the memory are executed by the processor, steps of the method according to any one of claims 1 to 7 are implemented.

20. A data conversion apparatus, comprising a processor, wherein the processor is coupled to a memory, the memory stores a program, and when program instructions stored in the memory are executed by the processor, steps of the method according to claim 8 or 9 are implemented.

21. A computer-readable storage medium, comprising computer program instructions, wherein when the computer program instructions are executed by a processor, the processor performs the method according to any one of claims 1 to 9.

22. A computer program product, wherein the computer program product comprises software code, and the software code is used to perform steps of the method according to any one of claims 1 to 9.

[FIG. 1]

[FIG. 2]

[FIG. 3]

[FIG. 4]

```
┌──────────────────────────────────────────────────┐      ┌─── 401
│              Obtain a noise set                    │──────┘
└──────────────────────────────────────────────────┘
                        │
                        ▼
┌──────────────────────────────────────────────────┐      ┌─── 402
│  Use data in the noise set as an input of a        │──────┘
│  generative model, and output at least one         │
│  generated sample                                  │
└──────────────────────────────────────────────────┘
                        │
                        ▼
┌──────────────────────────────────────────────────┐      ┌─── 403
│  Use at least one generated sample as an input     │──────┘
│  of a first diffusion model, and output at least   │
│  one first diffusion score                         │
└──────────────────────────────────────────────────┘
                        │
                        ▼
┌──────────────────────────────────────────────────┐      ┌─── 404
│  Obtain at least one second diffusion score        │──────┘
│  output by a second diffusion model                │
└──────────────────────────────────────────────────┘
                        │
                        ▼
┌──────────────────────────────────────────────────┐      ┌─── 405
│  Update the generative model based on the at       │──────┘
│  least one first diffusion score and the at least  │
│  one second diffusion score, to obtain an updated  │
│  generative model                                  │
└──────────────────────────────────────────────────┘
```

Iteration is performed until the model converges

[FIG. 5]

$$\boxed{\begin{array}{c}\text{Initialize models:}\\\text{generative model } G_\theta\text{, and}\\\text{diffusion models } S_u^\phi \text{ and } S_g^\psi\end{array}}\quad \boxed{501}$$

$$\boxed{\begin{array}{c}\text{Update the diffusion}\\\text{model } S_u^\phi\end{array}}$$

$$\boxed{\begin{array}{c}\text{Update the diffusion}\\\text{model } S_g^\psi\end{array}}$$

Perform iteration until convergence occurs

$$\boxed{\begin{array}{c}\text{Update the generative}\\\text{model } G_\theta\end{array}}$$

$$\boxed{\begin{array}{c}\text{Deploy the generative}\\\text{model } G_\theta\end{array}}$$

[FIG. 6]

[FIG. 7]

[FIG. 8]

[FIG. 9]

EP 4 621 706 A1

[FIG. 10]

| Receive input data of a user | — 1001 |

↓

| Use the input data as an input of a generative model, and obtain an output result and feed the output result back to the user | — 1002 |

[FIG. 11]

Data distribution          Ours          GAN          This application

[FIG. 12]

This application          GAN          WGAN

[FIG. 13]

Input text: on ancient road in the west wind a lean horse goes, ethereal, melodious, 3D, painting, and ancient

[FIG. 14]

Input text: motorcycle, the setting sun in the west, Chinese style, and painting

[FIG. 15]

Input text: future city and science fiction illustration

[FIG. 16]

Input text: pyramid and Van Gogh style

[FIG. 17]

Input text: absorb the energy of the cosmos over a cup of coffee, and 3D painting

[FIG. 18]

[FIG. 19]

Data conversion apparatus

1901　　　　　　　　　　　1902

Transceiver module　　　　Generation module

[FIG. 20]

2001　　　　　2002　　　　　2003

Processor　　　Memory　　　Transceiver

[FIG. 21]

2101　　　　　2102　　　　　2103

Processor　　　Memory　　　Transceiver

[FIG. 22]

EP 4 621 706 A1

## INTERNATIONAL SEARCH REPORT

International application No.

**PCT/CN2023/133865**

| A. | CLASSIFICATION OF SUBJECT MATTER |
|---|---|

G06T5/00(2024.01)i

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 生成模型, 生成网络, 扩散模型, 得分, 评分, 评价, 第一, 第二, 两个, 多个, 至少, 噪声, 加噪, 非对抗, 知识蒸馏, 教师模型, 学生模型, generative model, generative network, diffus+, score, evaluat+, first, second, multiple, noise, non-adversarial, knowledge distillation, teacher model, student model

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021042774 A1 (HUAWEI TECHNOLOGIES CO., LTD.) 11 March 2021 (2021-03-11) description, paragraphs 0210-0394 | 1-22 |
| A | CN 111951805 A (HUAWEI TECHNOLOGIES CO., LTD.) 17 November 2020 (2020-11-17) entire document | 1-22 |
| A | CN 113807399 A (HUAWEI TECHNOLOGIES CO., LTD.) 17 December 2021 (2021-12-17) entire document | 1-22 |
| A | US 2020357096 A1 (KING ABDULLAH UNIVERSITY OF SCIENCE AND TECHNOLOGY) 12 November 2020 (2020-11-12) entire document | 1-22 |
| A | WO 2022042713 A1 (HUAWEI TECHNOLOGIES CO., LTD.) 03 March 2022 (2022-03-03) entire document | 1-22 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 February 2024** | **01 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/133865**

| Patent document cited in search report | | | Publication date (day/month/year) | Patent family member(s) | | | Publication date (day/month/year) |
|---|---|---|---|---|---|---|---|
| WO | 2021042774 | A1 | 11 March 2021 | CN | 112446835 | A | 05 March 2021 |
| CN | 111951805 | A | 17 November 2020 | WO | 2022007823 | A1 | 13 January 2022 |
| | | | | EP | 4167231 | A1 | 19 April 2023 |
| | | | | US | 2023162723 | A1 | 19 April 2023 |
| CN | 113807399 | A | 17 December 2021 | | None | | |
| US | 2020357096 | A1 | 12 November 2020 | US | 2022343465 | A1 | 27 October 2022 |
| | | | | WO | 2019145767 | A1 | 01 August 2019 |
| WO | 2022042713 | A1 | 03 March 2022 | CN | 112183718 | A | 05 January 2021 |
| | | | | EP | 4198826 | A1 | 05 January 2021 |
| | | | | US | 2023206069 | A1 | 05 January 2021 |

Form PCT/ISA/210 (patent family annex) (July 2022)

**EP 4 621 706 A1**

**Patent documents cited in the description**

- CN 202211497412